# EUROPÄISCHE PATENTSCHRIFT

(11) **EP 4 260 157 B1**
(45) Veröffentlichungstag und Bekanntmachung des Hinweises auf die Patenterteilung: **13.08.2025**
(21) Anmeldenummer: 21839831.1
(22) Anmeldetag: 13.12.2021
(51) Int. Cl.: G05G 5/03, G05G 1/08, B62D 5/00, F16D 57/00, B62D 6/00, B62D 7/22

(54) **HAPTISCHE BEDIENEINRICHTUNG MIT EINER MAGNETORHEOLOGISCHEN BREMSEINRICHTUNG**
STEERING WHEEL WITH A MAGNETORHEOLOGICAL TORQUE GENERATOR
VOLANT AVEC GÉNÉRATEUR DE COUPLE MAGNETORHÉOLOGIQUE

(30) Priorität: 12.12.2020 DE 102020133246; 12.10.2021 DE 102021126371
(43) Veröffentlichungstag der Anmeldung: 18.10.2023
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2021/085568
(87) Internationale Veröffentlichungsnummer: WO 2022/123088

(56) Entgegenhaltungen:
- CN-A- 108 930 731
- DE-A1- 102010 055 831
- US-A1- 2006 280 575
- US-A1- 2019 317 544

## Beschreibung

Die Erfindung betrifft eine haptische Bedieneinrichtung und insbesondere einen haptischen Bedienknopf mit einer magnetorheologischen Bremseinrichtung mit einem feststehenden Halter und mit wenigstens zwei Bremskomponenten, die um eine Rotationsachse relativ zueinander kontinuierlich drehbar sind, und ein Verfahren sowie die Verwendung der Vorrichtung.

Die haptische Bedien- oder Betätigungseinrichtung kann insbesondere bei der Bedienung von technischen Einrichtungen in Kraftfahrzeugen und anderen Fahrzeugen verwendet werden, so zum Beispiel als Drehsteller, Dreh-/Drücksteller, für das Infotainment, die Klimaanlage (Temperatur, Lüftungsstufe, Verteilung), als Getriebewahlschalter, zur Navigation, bei dem Tempomat, bei der Abstandsregelung, als Sitzverstellung, in der Lenkung (Steer by wire oder Lenkung allgemein) oder im Lenkrad, im Lenker oder Lenkstrang von einem Zweirad, Dreirad, oder Vierrad (z.B. OFF-Highway Fahrzeug wie z.B. Fahrzeuge der Firma Polaris), Jetski, Schneemobile, ALL Terrain Vehicle, bei den Pedalen, bei der Fahrwerksverstellung, bei der Fahrmodiverstellung, zur Scheibenwischereinstellung, zur Fensterverstellung oder zur Schiebedachverstellung, beim Parkassistenten oder zum Einstellen des (teil-) autonomen Fahrens oder sogar als Lenkradersatz.

Der Einsatz ist bei Kraftfahrzeugen, Luftfahrzeugen, Flugzeugen, Schiffen, Booten, in der Landtechnik bei zum Beispiel Traktoren oder Mähdrescher, Erntemaschinen und sonstigen Feldmaschinen für die Landwirtschaft möglich. Der Einsatz ist auch bei Baumaschinen und zum Beispiel Gabelstaplern oder ähnlichen Maschinen oder auch bei medizinischen oder industriellen Anlagen möglich.

Die Erfindung kann auch bei der Bedienung oder als Eingabegerät von Waschmaschinen, Küchengeräten und Haushaltsgeräten, Radios, Fotoapparaten und Filmkameras, Hi-Fi- und Fernsehanlagen, Smart Devices, Smart-Home-Geräten, Laptops, PCs, Smartwatches, in einem Kronenrad von Armbanduhren oder als Computermaus oder als Drehrad in einer Computermaus, an Spiele-Konsolen, beim Gamingequipment, als Drehknopf in einer Tastatur oder an anderen Geräten verwendet werden.

Magnetorheologische Fluide weisen beispielsweise in einem Öl verteilt feinste ferromagnetische Partikel wie beispielsweise Carbonyleisenpulver auf. In magnetorheologischen Flüssigkeiten werden annähernd runde oder kugelförmige Partikel mit einem herstellungsbedingten Durchmesser von 1 µm bis 10 µm verwendet, wobei die Partikelgröße und Partikelform nicht einheitlich ist. Wird ein solches magnetorheologisches Fluid mit einem Magnetfeld beaufschlagt, so verketten sich die Carbonyleisenpartikel des magnetorheologischen Fluides oder des magnetorheologischen Mediums oder des magnetorheologischen Fluides entlang der Magnetfeldlinien, sodass die rheologischen Eigenschaften des magnetorheologischen Mediums abhängig von Form und Stärke des Magnetfeldes erheblich beeinflusst werden (übertragbare Schubspannungen).

Bremseinheiten mit magnetorheologisches Flüssigkeiten sind aus dem Stand der Technik bekannt, z.B. die MRF Bremse der Firma Lord Corporation in verschiedenen Baugrößen (5 Nm, 12 Nm, 20 Nm): https://www.lord.com/products-and-solutions/steer-by-wiretactile-feedback-device. Diese werden u.a. auch als "Steer-by-Wire Tactile Feedback" eingesetzt. Diese Bremsen funktionieren an sich. Ein Nachteil dieser MRF Bremsen ist aber deren relativ hohe Grundreibung (Grundmoment) in Relation zum Maximalmoment (Arbeitsbereich). Der Arbeitsbereich der 5 Nm Bremse ist laut Webseite/Spezifikation der Firma Lord 0,5 bis 5 Nm (Faktor 10), bei der 12 Nm Bremse liegt der Arbeitsbereich zwischen 1 Nm und 12 Nm (Faktor 12) und bei der 20 Nm Bremse liegt der Arbeitsbereich zwischen 1 Nm und 20 Nm (Faktor 20). Dieser relativ geringe Arbeitsbereich ist für viele Anwendungen nicht ausreichend, weshalb diese Serienprodukte primär bei grobmotorischen Anwendungen im Einsatz sind (u.a. Bedienung meist mit Handschuhen, wie in der Industrie, bei Landmaschinen, an Gabelstaplern...).

Feinmotorische Anwendungen wie die Bedienung vom Infotainment mit Dreh-/Drückstellern mittels dreier Finger im Auto, die Bedienung von Spielekonsolen beim Gaming, aber auch das Lenken eines Personenkraftwagens benötigen ein wesentlich niederes Grundmoment bei gleichzeitig höherem Maximalmoment, also einen erheblich größeren Arbeitsbereich. Besonders das hohe Grundmoment führt rasch zum Ermüden bzw. ganz feine Einstellvorgänge werden damit haptisch schwierig. Die bekannten MRF Bremsen lassen einen großen Arbeitsbereich aber nicht zu, da die Reibflächen zu groß sind. Kleinere Reibflächen würden zwar das Grundmoment verringern, aber damit würde auch das Maximalmoment kleiner werden.

Mit der WO 2012/034697 A1 ist eine magnetorheologische Übertragungsvorrichtung bekannt geworden, die zwei koppelbare Komponenten aufweist, deren Kopplungsintensität beeinflussbar ist. Zur Beeinflussung der Kopplungsintensität ist ein Kanal mit einem magnetorheologischen Medium vorgesehen. Über ein Magnetfeld wird das magnetorheologische Medium in dem Kanal beeinflusst. In dem Kanal sind Drehkörper vorgesehen, an denen spitzwinklige und das magnetorheologische Medium enthaltende Bereiche vorgesehen sind. Der Kanal oder wenigstens ein Teil davon ist mit dem Magnetfeld einer Magnetfelderzeugungseinrichtung beaufschlagbar, um die Partikel wahlweise (magnetisch) zu verketten und mit den Drehkörpern zu verkeilen oder freizugeben. Diese magnetorheologische Übertragungsvorrichtung kann auch an einem Drehknopf zur Bedienung von technischen Geräten eingesetzt werden. Eine solche magnetorheologische Übertragungsvorrichtung funktioniert und erlaubt die Übertragung von recht hohen Kräften oder Drehmomenten bei gleichzeitig relativ kleiner Bauform bzw. Bauvolumen.

Aus der US 2006/280575 A1 ist ein Bedienelement für ein Kraftfahrzeug mit einem Gehäuse, einem Drehknopf und einer damit verbundenen Welle bekannt geworden. Der Drehknopf ist über ein Kugellager drehbar gelagert. Ein magnetorheologisches Bremselement dient zum Abbremsen. Es können auch eine elektromagnetisches Bremselement und eine Torsionsfeder umfasst sein.

Mit der DE 10 2010 055 831 A1 ist ein Bedienkopf bekannt geworden, der eine magnetorheologische Bremse aufweist, bei der das Magnetfeld durch das Kugellager verläuft.

In der WO 2012/034697 A1 ist auch ein Drehknopf oder Bedienknopf offenbart, bei dem der eigentliche Knopf um eine Welle drehbar angebracht ist. Über das von einer elektrischen Spule erzeugte Magnetfeld kann das Bremsmoment gesteuert werden. Wird ein noch höheres erzeugbares Bremsmoment gewünscht, so können statt kugelförmiger Drehkörper auch zylindrische Walzen eingesetzt werden, sodass das Magnetfeld auf einer längeren Strecke bzw. größeren Fläche wirkt (es findet eine Magnetfeldkonzentration und Keilbildung über eine größere Fläche statt). Eine haptische Bedieneinrichtung mit derartigen Drehkörpern oder Wälzkörpern erlaubt eine zufriedenstellende Funktion und ein sehr hohes Drehmoment für einen haptischen Bedienknopf, während gleichzeitig bei abgeschaltetem Magnetfeld ein geringes Brems-/Grundmoment anliegt (z.B. kleiner 0,5 Nm bei 50 Nm Maximalmoment. Das Verhältnis von maximal erzeugbarem Drehmoment zu minimalem Drehmoment (Grundmoment) ist hoch (> 100).

Nachteilig ist aber, dass das hohe maximal Drehmoment nur bei geringen Drehzahlen der haptischen Bedieneinrichtung erzielbar ist. Überschreitet die Drehzahl einen von der jeweiligen Konstruktion abhängigen Wert, so sinkt das Maximalmoment erheblich ab und erfüllt die Anforderungen nicht immer.

Es ist deshalb die Aufgabe der vorliegenden Erfindung, eine haptische Bedieneinrichtung und insbesondere einen haptischen Bedienknopf mit einer magnetorheologischen Brems- oder Dämpfeinrichtung zu Verfügung zu stellen, womit ein geringes Grundmoment und ein relativ hohes Maximaldrehmoment bei unterschiedlichen Drehzahlen erzeugbar ist.

Diese Aufgabe wird gelöst durch eine haptische Bedieneinrichtung mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und aus der Beschreibung der Ausführungsbeispiele.

Eine erfindungsgemäße haptische Bedieneinrichtung kann insbesondere als haptischer Bedienknopf oder Drehknopf oder Drehelement ausgebildet sein. Die haptische Bedieneinrichtung weist wenigstens eine magnetorheologische Bremseinrichtung mit einem feststehenden Halter und mit wenigstens zwei Bremskomponenten auf. Eine der beiden Bremskomponenten ist mit dem Halter drehfest verbunden. Die beiden Bremskomponenten sind relativ zueinander kontinuierlich um eine (gemeinsame) Rotationsachse drehbar. Eine erste Bremskomponente erstreckt sich entlang der Rotationsachse (in axialer Richtung) und umfasst einen Kern aus einem magnetisch leitfähigen Material. Das bedeutet, dass sich die erste Bremskomponente wenigstens abschnittsweise entlang der Rotationsachse erstreckt. Oder dass sich wenigstens ein Abschnitt der ersten Bremskomponente oder vorzugsweise ein wesentlicher Teil der ersten Bremskomponente entlang der Rotationsachse erstreckt. Die zweite Bremskomponente umfasst ein sich um die erste Bremskomponente herum erstreckendes hohl ausgebildetes Mantelteil (aus einem magnetisch leitfähigen Material). Zwischen der ersten und der zweiten Bremskomponente sind umlaufende und insbesondere axial voneinander beabstandete und wenigstens zum Teil mit einem magnetorheologischen Medium gefüllte Bremsspaltabschnitte ausgebildet. Zwischen einem ersten Bremsspaltabschnitt und einem zweiten Bremsspaltabschnitt ist (in axialer Richtung) wenigstens ein dritter oder mittlerer Bremsspaltabschnitt angeordnet. Dem ersten Bremsspaltabschnitt ist eine erste elektrische Spule und dem zweiten Bremsspaltabschnitt ist eine separat steuerbare zweite elektrische Spule zugeordnet.

Die erfindungsgemäße haptische Bedieneinrichtung hat viele Vorteile. Ein erheblicher Vorteil der erfindungsgemäßen haptischen Bedieneinrichtung besteht darin, dass zwei separate elektrische Spulen (mit damit zusammenwirkenden Bremsspaltabschnitten) vorgesehen und unterschiedlich ansteuerbar sind.

Dadurch kann die haptische Wirkung noch besser und feinfühliger dosiert eingestellt werden. Damit kann die Bremswirkung z.B. bei geringen Drehzahlen oder im Stillstand mit der einen bzw. ersten elektrischen Spule (und dem damit zusammenhängenden Bremsspalt) eingestellt werden, während mit der zweiten elektrischen Spule (plus Bremsspalt) das Bremsmoment z.B. bei höheren Drehzahlen oder bei einem höheren gewünschten oder benötigten Bremsmoment optimal eingestellt werden kann. Die Einstellung der jeweiligen Stromstärken und Stromverläufe kann unabhängig voneinander erfolgen.

Besonders wenn die zur Verfügung stehende Elektronik keine große Regelspanne aufweist, ist es vorteilhaft, wenn zwei (gleiche oder mitunter auch unterschiedliche) Spulen für verschiedene Drehmomente und Drehzahlen unabhängig voneinander geregelt werden können. Das ist z.B. bei PKWs der Fall, wo die Bordelektronik nur eine limitierte Leistung bzw. Spannung zur Verfügung stellt. Die haptische Bedieneinrichtung kann als Dreh-/Drückknopf den Bordcomputer oder die verschiedenen Funktionen der Komponenten des Fahrzeugs steuern, oder im Lenkrad als Bedienwalze oder für eine für Steer-by-wire Anwendung. Dort kann eine erste elektrische Spule (mit z.B. einer Sternkontur im Bremsspaltabschnitt) für die niedrigen Bremsmomente verwendet werden, bei der kleine Momente (z.B. 0,1Nm) mit hoher Auflösung erzeugt werden sollen. Das regelbare Drehmoment ist in dem Fall auch nicht (oder nur minimal) geschwindigkeitsabhängig. Die zweite elektrische Spule kann z. B. das Magnetfeld in einem anderen und z. B. dem zweiten oder dritten Bremsspaltabschnitt (z.B. Keillager mit Wälzkörpern) für hohe Sperrmomente bzw. das Maximalmoment einstellen bzw. regeln, wie es bei einem Endanschlag notwendig ist. Derart hohe Momente benötigen keine hohe Auflösung und die Geschwindigkeitsabhängigkeit ist in dem Fall nicht ausschlaggebend.

Die Erfindung ermöglicht es, dass für das Bremsen im Stillstand (Blockieren) z.B. eine elektrische Spule bzw. ein (extra dafür ausgelegter) Magnetkreis verwendet wird, womit ein besonders hohes Bremsmoment erzeugbar ist. Dabei muss (im Stillstand bei hohen Momenten) oft die Reproduzierbarkeit nicht besonders genau sein, was den konstruktiven Aufwand und die Kosten verringert. Eine stillstehende Bremskomponente dreht sich ja nicht, solange das Bremsmoment hoch genug ist und nicht überschritten wird. Die andere elektrische Spule bzw. der andere Magnetkreis können dann z.B. dafür ausgelegt sein, im laufenden Betrieb beim Drehen die entsprechende Bremskomponente gezielt abzubremsen. Das erfordert regelmäßig eine höhere Reproduzierbarkeit, damit haptisch kein Unterschied oder nur ein geringer Unterschied zu merken ist. Meist erfordert das höhere Anforderungen an die konstruktiven Bedingungen und kann einen größeren technischen Aufwand erfordern und höhere Kosten bedingen. Die Erfindung ermöglicht beide Eigenschaften auf einfache Art und Weise und insgesamt eine kostengünstige Gestaltung.

Wenigstens ein Bremsspaltabschnitt ist an einem Bremsspalt ausgebildet. Es ist möglich und bevorzugt, dass zwei oder mehr Bremsspaltabschnitte an einem gemeinsamen oder an verschiedenen (und gegebenenfalls räumlich oder baulich getrennten) Bremsspalten vorgesehen oder ausgebildet sind. So können alle Bremsspaltabschnitte an einem einzigen Bremsspalt ausgebildet sein. Möglich ist es auch, dass jeder einzelne Bremsspaltabschnitt an einem separaten Bremsspalt ausgebildet ist.

Besonders bevorzugt sind wenigstens zwei unterschiedlich ausgebildete Bremsspaltabschnitte umfasst. Insbesondere sind der erste und der zweite Bremsspaltabschnitte verschieden voneinander ausgestaltet. Der erste und der zweite Bremsspaltabschnitte sind vorzugsweise in radialer und/oder axialer (und/oder schräger) Richtung unterschiedlich ausgebildet und/oder sind funktional unterschiedlich ausgebildet.

Es ist ebenso bevorzugt, dass zwei oder drei (oder mehr) Bremsspaltabschnitte ähnlich, gleich oder sogar identisch ausgebildet sind. Insbesondere sind an wenigstens zwei (oder drei) Bremsspaltabschnitten gleiche (oder identische) Scheibenkonturen ausgebildet.

In solchen Ausgestaltungen kann über ein Zuschalten eines weiteren Bremskreises das Bremsmoment bei Bedarf flexibel und angepasst erhöht oder verringert werden. Auch eine alternierende Beaufschlagung ist möglich, um die Belastung der einzelnen elektrischen Spulen und/oder Bremsspaltabschnitte zu reduzieren.

Insbesondere ist es bevorzugt, dass zwei oder mehr Bremsspaltabschnitte nach dem gleichen Funktionsprinzip aufgebaut sind. So können bei drei Bremsspaltabschnitten die axial äußeren (grundsätzlich oder exakt) gleich aufgebaut sein, während der mittlere Bremsspaltabschnitt (grundsätzlich) ebenfalls gleich, aber z. B. andere (und z. B. axial längere) Abmessungen aufweist.

Der Bremsspalt umfasst insbesondere wenigstens drei (insbesondere axial voneinander beabstandete und vorzugsweise umlaufende) Bremsspaltabschnitte. Dabei können die Bremsspaltabschnitte gleich oder unterschiedlich ausgebildet sein. Insbesondere können die Bremsspaltabschnitte in Bezug auf ihre Scheibenkonturen gleich oder unterschiedlich ausgebildet sein.

Dadurch kann bei unterschiedlichen Drehzahlen und Anforderungen der haptischen Bedieneinrichtung auf unterschiedliche Art und Weise gebremst werden. Während z. B. der erste Bremsspaltabschnitt (funktional bedingt) ein höheres Drehmoment bei geringeren Drehzahlen erzeugen kann, kann z. B. der zweite Bremsspaltabschnitt durch den anderen Aufbau bedingt auch bei höheren Drehzahlen ein relativ hohes Drehmoment erzeugen. Solche Wirkungen können auch durch die beiden elektrischen Spulen erzeugt und insbesondere erheblich verstärkt werden. Es kann im Stillstand ein besonders hohes Drehmoment erzeugt werden und bei hohen Drehzahlen ein fein steuerbares niedriges oder bei Bedarf auch hohes Drehmoment, je nach Ansteuerung der beiden elektrischen Spulen.

Dadurch kann auch über den gesamten Drehzahlbereich ein konstantes maximales Drehmoment erreicht werden, was in vielen Anwendungen auch sehr vorteilhaft ist.

Vorteilhaft ist auch die Redundanz, die ein solches System mit zwei elektrischen Spulen liefert. Wenn eine Spule ausfallen sollte, kann die zweite Spule immer noch ein Magnetfeld erzeugen, und somit über den zugehörigen Bremsspaltabschnitt ein regelbares Drehmoment bereitstellen (wenn auch nicht immer mit der gleichen Güte). Für Anwendungen, bei denen eine hohe Ausfallsicherheit gefordert wird, ist Redundanz sehr vorteilhaft.

Insbesondere sind der erste Bremsspaltabschnitt und der zweite Bremsspaltabschnitt unterschiedlich ausgebildet. Es sind vorzugsweise wenigstens zwei (funktional) unterschiedliche und radial ausgebildete Bremsspaltabschnitte umfasst. Die Bremsspaltabschnitte sind vorzugsweise separat voneinander ausgebildet und in vorteilhaften Ausgestaltungen in axialer Richtung voneinander getrennt.

Vorzugsweise sind der erste Bremsspaltabschnitt und der zweite Bremsspaltabschnitt unterschiedlich weit (Spalthöhe) ausgebildet und/oder weisen unterschiedliche Querschnittsverläufe auf.

Besonders bevorzugt ist es auch, dass an dem ersten Bremsspaltabschnitt und dem zweiten Bremsspaltabschnitt wenigstens teilweise unterschiedliche Materialien eingesetzt sind. Insbesondere können sich in den Bereichen des ersten Bremsspaltabschnitts und des zweiten Bremsspaltabschnitts die eingesetzten Materialien an dem Kern und/oder dem Mantelteil wenigstens abschnittsweise unterscheiden. Es können gleiche oder unterschiedliche Materialien und Konstruktionen für die elektrischen Spulen verwendet werden.

Die zwei Bremsspaltabschnitte können verschiedene Laufspiele und Spaltabmessungen und/oder Spaltkonturen und Spaltverläufe (der sich zueinander bewegenden Teile) haben. Eine kleine Spalthöhe kann höhere Momente bringen, ist aber oft schwerer regelungstechnisch zu beherrschen. Eine große Spalthöhe verhält sich in der Regel gegenteilig (niederes Moment, aber besser regelbar). Je nach Anforderungen kann somit die eine (erste) oder die andere (zweite) elektrische Spule (Elektrospule) bestromt werden. So benötigt z.B. ein Endstop (Anschlag, Barriere) meist sehr hohe Momente und wenig Regelungstechnik, da der Aktor quasi steht (Stillstand). Hier sind ein kleiner Spalt (Spalthöhe) oder mögliche Drehkörper/Walzen in dem Bremsspaltabschnitt effizient. Ein möglichst konstantes Bremsen bei höheren Drehzahlen benötigt regelmäßig hingegen eine hohe Regelgüte, hier ist eine größere Spalthöhe und/oder eine Scheiben-/Sternkontur an einem Bremsspaltabschnitt von Vorteil.

Ein erheblicher Vorteil einer solchen haptischen Bedieneinrichtung besteht darin, dass zwei funktional unterschiedliche und jeweils in radialer Richtung ausgebildete Bremsspaltabschnitte umfasst sind. Dadurch kann bei unterschiedlichen Drehzahlen der haptischen Bedieneinrichtung auf unterschiedliche Art und Weise gebremst werden. Während einer der Bremsspaltabschnitte (funktional bedingt) ein höheres Drehmoment bei geringeren Drehzahlen erzeugt, erzeugt der andere Bremsspaltabschnitt durch den anderen Aufbau bedingt auch bei höheren Drehzahlen ein relativ hohes Drehmoment. Dadurch wird über den gesamten Drehzahlbereich ein konstantes maximales Drehmoment erreicht, was in vielen Anwendungen sehr vorteilhaft ist.

Die haptische Bedieneinrichtung ist einfach aufgebaut, verwendet nur wenige Teile und erlaubt eine leichte und kostengünstige Fertigung. Die Grundreibung ist gering und es kann für unterschiedliche Drehzahlen und auch im Stillstand ein hohes Maximaldrehmoment bereitgestellt werden. Die Fertigung ist einfach und kostengünstig.

Die erste Bremskomponente definiert eine axiale Richtung. Insbesondere ist eine Symmetrieachse der ersten Bremskomponente die Rotationsachse. Vorzugsweise erstreckt sich der Kern der ersten Bremskomponente in der axialen Richtung, kann aber auch einen leichten Winkel zur axialen Richtung aufweisen.

Die Erfindung ermöglicht es, ein hohes Bremsmoment bei unterschiedlichen Drehzahlen bei einem kleinen Bauraum zu erzeugen. Das Magnetfeld durchtritt die zwei unterschiedlichen Bremsspaltabschnitte zwischen dem Kern und dem Mantelteil jeweils im Wesentlichen radial oder jedenfalls doch quer zu der Rotationsachse.

Besonders bevorzugt ist an wenigstens einem und insbesondere dem ersten Bremsspaltabschnitt eine Scheibenkontur zwischen dem Mantelteil und dem Kern angeordnet oder ausgebildet. Der erste Bremsspaltabschnitt ist insbesondere ein axial äußerer Bremsspaltabschnitt, insbesondere wenn insgesamt drei (oder vier) Bremsspaltabschnitte umfasst sind. Es ist möglich, dass an bzw. in einem zweiten Bremsspaltabschnitt eine davon (d. h. von dem ersten Bremsspaltabschnitt) unterschiedlich geformte Scheibenkontur zwischen dem Mantelteil und dem Kern ausgebildet ist. Möglich sind aber auch gleich ausgebildete Bremsspaltabschnitte.

Möglich und vorteilhaft ist auch, dass die haptische Bedieneinrichtung oder ein zugeordnetes Steuergerät dazu geeignet und ausgebildet ist, in Abhängigkeit der Höhe eines einzustellenden Bremsmoments wenigstens zwei (oder wenigstens drei oder wenigstens vier) Bremsspaltabschnitte der wenigstens drei Bremsspaltabschnitte auszuwählen und durch ihre Kombination das Bremsmoment zu erzeugen.

Beispielsweise kann ein Endanschlag durch eine Kombination von wenigstens zwei (oder wenigstens drei oder wenigstens vier) Bremsspaltabschnitten der wenigstens drei Bremsspaltabschnitte erzeugbar sein.

In allen Ausgestaltungen ist es bevorzugt, dass alle Bremsspaltabschnitte wenigstens teilweise mit einem magnetorheologischen Medium gefüllt sind.

In allen Ausgestaltungen ist es bevorzugt, dass die Bremsspaltabschnitte an einem gemeinsamen Spalt ausgebildet sind, der sich umlaufend zwischen den beiden Bremskomponenten erstreckt.

Vorzugsweise ist eine Scheibenkontur an dem ersten oder an wenigstens einem Bremsspaltabschnitt an dem Mantelteil und/oder dem Kern angeordnet, befestigt oder ausgebildet. Praktisch wird durch die Scheibenkontur vorzugsweise der (erste) Bremsspaltabschnitt definiert. Unter einer Scheibenkontur wird auch eine scheibenkonturähnliche Form verstanden.

Die Scheibenkontur kann als Ringflansch integral mit dem Kern ausgebildet sein, kann aber auch ein separates Teil sein, welches an dem Kern angeordnet oder befestigt wird. Die Scheibenkontur kann auch mehrteilig sein. Denkbar ist es auch, dass die Scheibenkontur integral an dem Mantelteil ausgebildet ist oder daran befestigt ist. In dem ersten Fall ragt die Scheibenkontur radial von dem Kern nach außen und in dem zweiten Fall radial von dem Mantelteil aus nach innen.

Möglich sind auch zwei Scheibenkonturen, von denen eine von dem Kern aus radial nach außen und die andere von dem Mantelteil aus radial nach innen absteht. Der zugehörige Bremsspaltabschnitt wird dann (insbesondere radial) zwischen den Scheibenkonturen ausgebildet. Denkbar ist es auch, dass zwischen einer von dem Kern radial nach außen abstehenden Scheibenkontur und einer von dem Mantelteil radial nach innen abstehenden Scheibenkontur ein definierter Axialspalt gebildet wird, der zu dem Bremsspaltabschnitt gehört. Radialspalte haben aber den Vorteil, dass sich ein axiales Spiel nicht auf die Spalthöhe bzw. Spaltweite auswirkt.

Vorzugsweise ist an dem zweiten (oder wenigstens einem) Bremsspaltabschnitt eine Mehrzahl von Wälzkörpern auf dem Umfang des Kerns angeordnet. Dabei sind die Wälzkörper vorzugsweise an einer Halterung (Wälzkörperhalterung) aufgenommen. Die Halterung bzw. Wälzkörperhalterung besteht besonders bevorzugt aus einem nicht magnetisch leitfähigen Material.

Der zweite Bremsspaltabschnitt ist vorzugsweise auch ein axial äußerer Bremsspaltabschnitt.

Insbesondere weist der erste Bremsspaltabschnitt eine Scheibenkontur mit zylindrischer Außengeometrie auf. Vorzugsweise weist der zweite Bremsspaltabschnitt eine veränderliche Spalthöhe über den Umfang des Bremsspaltabschnitts auf. Insbesondere weist der zweite Bremsspaltabschnitt eine als Sternkontur ausgebildete Scheibenkontur auf. Vorzugsweise weist der erste Bremsspaltabschnitt eine gleichbleibende Spalthöhe über den Umfang des Bremsspaltabschnitts auf. Möglich und bevorzugt ist auch, dass der erste Bremsspaltabschnitt eine weniger stark veränderliche Spalthöhe über den Umfang des Bremsspaltabschnitts aufweist als der zweite Bremsspaltabschnitt (oder umgekehrt). Dann weist der erste Bremsspaltabschnitt insbesondere auch eine Sternkontur auf.

Insbesondere ist an dem zweiten (oder wenigstens an einem) Bremsspaltabschnitt zwischen dem Mantelteil und dem Kern wenigstens eine Sternkontur angeordnet. Dadurch ergibt sich in dem Bereich der Sternkontur eine veränderliche Spalthöhe über den Umfang des Bremsspaltabschnitts. Auch in dieser Ausgestaltung ist der zweite Bremsspaltabschnitt vorzugsweise auch ein axial äußerer Bremsspaltabschnitt.

An einer Sternkontur sind vorzugsweise Magnetfeldkonzentratoren ausgebildet oder angeordnet, welche (radial) in den Spalt hineinragen, sodass sich in dem Bereich der Sternkontur der umlaufende zweite Bremsspaltabschnitt mit veränderlicher Spalthöhe ergibt

Die als Magnetfeldkonzentratoren dienenden Elemente können radial nach innen oder radial nach außen oder axial von einer Sternkontur abstehen. Die Magnetfeldkonzentratoren können z. B. zahnförmig, bogenförmig, sinusförmig, trapezförmig ausgebildet sein und können regelmäßig oder auch unregelmäßig verteilt angeordnet und unterschiedlich hoch sein.

Ein (einzelner) Magnetfeldkonzentrator kann auch als Arm ausgebildet sein. Ein Magnetfeldkonzentrator kann jeweils einzeln befestigt oder integral ausgebildet sein.

Vorzugsweise sind die erste elektrische Spule und die zweite elektrische Spule jeweils (radial) zwischen dem Mantelteil und dem Kern aufgenommen und sind jeweils um die Rotationsachse herum gewickelt.

Der dritte Bremsspaltabschnitt wird insbesondere durch wenigstens eine Ringkontur ausgebildet, welche zwischen dem Mantelteil und dem Kern angeordnet oder ausgebildet ist. Die Ringkontur kann analog zu einer zuvor beschriebenen Scheibenkontur integral oder als separates Teil auch mehrteilig ausgebildet sein. Insbesondere ist die Ringkontur in axialer Richtung länger ausgestaltet als die Scheibenkontur.

Die Ringkontur bildet vorzugsweise einen umlaufenden dünnen Spaltabschnitt zwischen dem Mantelteil und dem Kern aus, nämlich den dritten Bremsspaltabschnitt.

Vorzugsweise ist die erste elektrische Spule axial zwischen dem ersten Bremsspaltabschnitt und der Ringkontur angeordnet. Die zweite elektrische Spule ist vorzugsweise axial zwischen der Ringkontur und dem zweiten Bremsspaltabschnitt angeordnet.

Die Ringkontur kann als separates Teil ausgebildet sein.

In allen Ausgestaltungen ist es besonders bevorzugt, dass die Magnetfelder der ersten elektrischen Spule und der zweiten elektrischen Spule jeweils zu einem erheblichen Anteil durch die Ringkontur verlaufen.

In allen Ausgestaltungen ist es bevorzugt, dass die erste elektrische Spule und die zweite elektrische Spule unterschiedlich ausgebildet sind. Dadurch können den Bremsspaltabschnitten unterschiedliche Eigenschaften zugeordnet werden.

Es ist bevorzugt, dass wenigstens zwei elektrische Spulen und insbesondere die erste elektrische Spule und die zweite elektrische Spule sich in wenigstens einem Parameter aus einer Gruppe von Parametern und insbesondere von Spulenparametern unterscheiden. Die Gruppe der Parameter umfasst insbesondere den Drahtdurchmesser und Drahtquerschnitt (rund, eckig...), die Wicklungszahl, das Wickelfenster, die Wickelart, die Spulenbreite, die Spulengeometrie, den Spulenquerschnitt, den Spulendurchmesser und das Material der Spule und/oder das angrenzende Material.

Die elektrischen Spulen können unterschiedliche Drahtdurchmesser, Materialien und auch Wickelfenster (Gesamtquerschnittsfläche der Wicklung) haben. Eine Spule kann z.B. einen dickeren Draht mit einem geringeren elektrischen Widerstand haben, wodurch diese Spule regelungstechnisch schneller wird. Die Spulen können so optimal mit den speziellen Eigenschaften der damit in Zusammenhang stehenden Bremsabschnitte ausgelegt werden.

Durch Variation von Parametern oder Eigenschaften der elektrischen Spulen und/oder der zugehörigen Magnetkreisläufe kann eine elektrische Spule in Richtung "schnell" oder energieeffizient getrimmt werden. Eine elektrische Spule und die Bremseinrichtung insgesamt kann so hohe und schnelle Bremsmomente erzeugen, während die andere elektrische Spule z. B. energieeffiziente Bremsmomente erzeugt. Letzteres ist besonders bei batteriegetriebenen Fahrzeugen vorteilhaft.

Es können aber auch drei und mehrere elektrische Spulen und Bremsspaltabschnitte umfasst oder vorgesehen sein.

In besonders bevorzugten Ausgestaltungen und Weiterbildungen ist an dem ersten Bremsspaltabschnitt eine Scheibenkontur zwischen dem Mantelteil und dem Kern ausgebildet und in dem zweiten Bremsspaltabschnitt ist eine Mehrzahl von Wälzkörpern auf dem Umfang des Kerns angeordnet und in dem dritten Bremsspaltabschnitt ist die Ringkontur angeordnet. Die Ringkontur ist insbesondere breiter ausgebildet als die Scheibenkontur an dem ersten Bremsspaltabschnitt.

Vorzugsweise umfasst der Halter eine Achse bzw. Welle, an der eine Kabeldurchführung ausgebildet ist, durch welche elektrische Kabel über ein mit der Achse verbundenes Innenteil zu der ersten und der zweiten elektrischen Spule geleitet werden.

Die beiden elektrischen Spulen können an einer (gemeinsamen oder an separaten) Halterung (Spulenhalterung) aufgenommen sein.

Insbesondere sind an den axialen Enden ein erster und ein zweiter Deckel mit dem Mantelteil verbunden, wobei die Achse nur durch einen Deckel durchgeführt ist und gegenüber der Achse abgedichtet ist.

Es ist auch möglich und bevorzugt, dass wenigstens ein vierter Bremsspaltabschnitt umfasst ist. Dann ist es möglich, dass der ersten elektrischen Spule z. B. der erste und der dritte Bremsspaltabschnitt zugeordnet sind und dass der zweiten elektrischen Spule z. B. der zweite und der vierte Bremsspaltabschnitt zugeordnet sind. Möglich ist auch eine andere Zuordnung. Möglich ist es auch, dass das Magnetfeld wenigstens einer elektrischen Spule wenigstens drei Bremsspaltabschnitte durchtritt.

Werden Wälzkörper an dem zweiten Bremsspaltabschnitt eingesetzt, so dienen diese praktisch insbesondere als Magnetfeldkonzentratoren. Aufgrund der (als Magnetfeldkonzentratoren dienenden) Wälzkörper können sich zwischen den einzelnen Magnetfeldlinien und der radialen Ausrichtung spitze Winkel ergeben, aber generell oder im Durchschnitt verläuft das Magnetfeld im Wesentlichen radial. Das Gleiche gilt auch für den anderen Bremsspaltabschnitt mit der Scheibenkontur, bei der sich an dem radialen Ende der Scheibenkontur auch eine dreidimensionale Ausrichtung der Magnetfeldlinien ergeben kann, die aber im Durchschnitt oder insgesamt doch wieder im Wesentlichen radial ausgerichtet sind.

Insbesondere ist in einem axialen Bereich (direkt) benachbart zu der ersten elektrischen Spule eine Scheibenkontur oder ein Scheibenkörper zwischen dem Mantelteil und dem Kern ausgebildet und in einem (anderen) axialen Abschnitt ist (direkt) benachbart zu der zweiten elektrischen Spule eine Mehrzahl von Wälzkörpern (als Magnetfeldkonzentratoren) auf dem Umfang des Kerns angeordnet. Die Wälzkörper sind insbesondere in einer gemeinsamen Ebene quer oder senkrecht zur Rotationsachse angeordnet. Vorzugsweise können sich die Wälzkörper vollständig um den Kern herum bewegen. Eine Außenoberfläche des Kerns ist in dem zweiten Bremsspaltabschnitt vorzugsweise zylindrisch ausgebildet. Vorzugsweise ist (direkt) zwischen der ersten elektrischen Spule und der zweiten elektrischen Spule die Ringkontur angeordnet.

Vorzugsweise ist ein Radius bzw. (typischer oder maximaler) Durchmesser des ersten Bremsspaltabschnittes etwa und insbesondere genau so groß wie ein Radius bzw. (typischer oder maximaler) Durchmesser des zweiten Bremsspaltabschnittes und/oder des dritten Bremsspaltabschnittes. Dadurch werden große Momente auch bei höheren Drehzahlen und beim Anlaufen aus dem Stand erzeugbar.

Das magnetorheologische Medium benetzt insbesondere die erste und die zweite Bremskomponente wenigstens abschnittsweise.

Die erste elektrische Spule und die zweite elektrische Spule sind vorzugsweise um die Rotationsachse herumgewickelt und erzeugen im Wesentlichen ein Magnetfeld in axialer Richtung innerhalb des Kerns. Die beiden elektrischen Spulen sind dabei radial zwischen dem Kern und dem Mantelteil aufgenommen. Die elektrischen Spulen können dabei um den Kern gewickelt oder auch innen an dem Mantelteil befestigt sein.

Der Kern besteht aus einem magnetisch (gut) leitfähigen Material. Die erste Bremskomponente umfasst den Kern und insbesondere eine Achse oder einen Schaft, der insbesondere wenigstens zum Teil oder vollständig aus einem magnetisch nichtleitenden Material besteht. Vorzugsweise sind die Achse (der Schaft) und der Kern lösbar miteinander verbunden.

Die Scheibenkontur besteht wenigstens teilweise oder vollständig auch aus einem magnetisch (gut) leitfähigen Material.

In einer bevorzugten Weiterbildung ist die Scheibenkontur als separater Scheibenkörper ausgebildet. Möglich ist es auch, dass die Scheibenkontur einstückig mit dem Kern ausgebildet ist und z. B. T-förmig gestaltet ist, wobei der lange Schenkel des "T" entlang der Rotationsachse verläuft. Möglich ist es auch, dass ein Teil der Scheibenkontur einstückig mit dem Kern ausgebildet ist und durch einen separaten Scheibenkörper ergänzt wird. In einfachen und besonders bevorzugten Ausgestaltungen wird die Scheibenkontur durch einen separaten Scheibenkörper gebildet, der an oder auf dem Kern befestigt wird.

Vorzugsweise wird der Scheibenkörper auf den Kern aufgebracht. Dazu weist der Kern insbesondere eine angepasste Aufnahme auf.

Möglich und bevorzugt ist es zum Beispiel, dass der Scheibenkörper mit dem Kern verbunden oder aufgepresst wird. Möglich ist es aber auch, dass die Scheibenkontur bzw. der Scheibenkörper mit dem Mantelteil verbunden und zum Beispiel darin eingepresst wird. Denkbar ist es auch, dass zwei aufeinander angepasste Scheibenkörper eingesetzt werden, zwischen denen ein radialer Bremsspaltabschnitt gebildet wird. Dabei kann eine erste hohlzylindrische Scheibenkontur auf den Kern aufgebracht werden und eine zweite hohlzylindrische Scheibenkontur mit einem entsprechend großen Innendurchmesser in das Mantelteil eingebracht werden, sodass die beiden Scheibenkonturen zum Beispiel in axialer Richtung zueinander ausgerichtet sind und einen kleinen (radialen) Spalt zwischen sich belassen. Zwischen den beiden Scheibenkonturen verbleibt dann ein insbesondere im Wesentlichen radial ausgebildeter Bremsspaltabschnitt.

In besonders bevorzugten Ausgestaltungen weist die Scheibenkontur wenigstens ein Scheibenpaket auf. Das Scheibenpaket wird insbesondere durch eine Mehrzahl von vorzugsweise direkt aneinander anliegenden Scheibenblechen gebildet. Eine solche Ausgestaltung ermöglicht beispielsweise die Fertigung der Scheibenbleche als Stanzteil. Stanzteile können besonders leicht und kostengünstig in großen Stückzahlen hergestellt werden. Werden sie aufeinandergestapelt und zum Beispiel miteinander verpresst, so kann leicht und kostengünstig ein Scheibenpaket bzw. ein Scheibenkörper mit erheblich größerer Dicke bereitgestellt werden. Dadurch werden Scheibenbleche (auch Scheiben genannt) und auch Scheibenpakete sehr kostengünstig herstellbar. Einzelne Scheiben können auch verschiedene Eigenschaften haben (z.B. aufgrund von unterschiedlichem Materialien). Einzelne Scheiben können auch aus (gesintertem) Magnetwerkstoff sein (z.B. Neodym).

Es ist bevorzugt, dass wenigstens einige Scheibenbleche oder nahezu alle Scheibenbleche oder alle Scheibenbleche jeweils rund ausgebildet sind und den gleichen Durchmesser oder doch ähnliche Durchmesser aufweisen. Möglich ist aber auch der Einsatz von einigen oder einzelnen unrund ausgebildeten Scheibenblechen, an denen beispielsweise radial außen eine unrunde Außenkontur oder eine Zahnstruktur oder Sternkontur ausgebildet ist. Werden rund und unrund ausgebildete Scheibenbleche zu einem Scheibenpaket gestapelt, so kann eine komplexe Außenkontur erzeugt werden, die lokal zu einer größeren Magnetfeldkonzentration führen kann. Möglich ist es auch, dass ein Scheibenpaket mehrere rund (oder unrund) ausgebildete Scheibenbleche mit unterschiedlichen Außendurchmessern umfasst. So können abwechselnd runde Scheibenbleche mit geringerem und mit größerem Durchmesser vorgesehen sein.

In besonders bevorzugten Ausgestaltungen weist die Scheibenkontur insgesamt eine zylindrische Außenkontur auf.

Es ist möglich und bevorzugt, dass die Scheibenkontur an wenigstens einer axialen Seite eine (axial) nach außen abstehende Außenkontur aufweist. Die Scheibenkontur kann dabei insgesamt konisch, bauchig, abgerundet oder abgestuft ausgebildet sein. Insbesondere ist die Scheibenkontur rotationssymmetrisch im Bereich der Außenkontur ausgebildet. Die nach außen abstehende Außenkontur kann sich beispielsweise an einem Deckel oder dergleichen abstützen oder dort geführt werden. Die nach außen abstehende Außenkontur ermöglicht dadurch die Bereitstellung eines Reservoirs an magnetorheologischen Partikeln.

In allen Ausgestaltungen mit Einsatz von Wälzkörpern ist es bevorzugt, dass ein radialer Freiraum für einen Wälzkörper zwischen dem Mantelteil und dem Kern in dem zweiten Bremsspaltabschnitt größer ist als eine Spalthöhe in dem ersten Bremsspaltabschnitt (in dem Bereich der Scheibenkontur). Ein radialer Freiraum ergibt sich dabei als Differenz der Spalthöhe in dem zweiten Bremsspaltabschnitt abzüglich des Durchmessers des Wälzkörpers. Typischerweise teilt sich der radiale Freiraum etwa gleichmäßig radial außerhalb des Wälzkörpers und radial innerhalb des Wälzkörpers auf. In einfachen Fällen ist der Wälzkörper radial mittig angeordnet und der radiale Abstand der Außenfläche des Wälzkörpers zur inneren Oberfläche des Mantelteils und der radiale Abstand von der äußeren Umfangsfläche des Kerns zur radial inneren Außenoberfläche des Wälzkörpers sind etwa gleich.

Vorzugsweise ist der radiale Freiraum (insgesamt) für einen Wälzkörper in dem zweiten Bremsspaltabschnitt mehr als doppelt und insbesondere wenigstens dreimal so groß wie die Spalthöhe in dem ersten Bremsspaltabschnitt. Das bedeutet, dass im Normalfall der Wälzkörper radial nach außen und radial nach innen mehr Spielraum hat als die Spalthöhe an dem Scheibenkörper in dem ersten Bremsspaltabschnitt beträgt. Es ist auch möglich und bevorzugt, dass der radiale Freiraum für einen Wälzkörper in dem zweiten Bremsspaltabschnitt viermal so groß oder noch größer ist als die Spalthöhe in dem ersten Bremsspaltabschnitt. Vorzugsweise ist eine Spalthöhe an dem Bremsspaltabschnitt an der Scheibenkontur kleiner als 0,15 mm und vorzugsweise kleiner als 0,1 mm. Vorzugsweise sind der radiale Freiraum in dem zweiten Bremsspaltabschnitt und die Spalthöhe in dem ersten Bremsspaltabschnitt an der Scheibenkontur und die Spalthöhe in dem dritten Bremsspaltabschnitt (erheblich) kleiner als ein radialer Abstand in anderen Bereichen des Spaltes. Der radiale Abstand von den Außendurchmessern der elektrischen Spulen oder von dem Außendurchmesser eines Überzugs über die elektrischen Spulen oder einer Umspritzung der elektrischen Spulen bis zur radialen Innenwandung des Mantelteils ist (axial) außerhalb der beiden Bremsspaltabschnitte vorzugsweise (erheblich) größer als in den beiden Bremsspaltabschnitten. Der Größenunterschied kann den Faktor 2 oder 3 erreichen und weit übersteigen.

In konkreten Ausgestaltungen beträgt der radiale Freiraum für einen Wälzkörper in dem zweiten Bremsspaltabschnitt etwa 0,2 mm, während die Spalthöhe in dem ersten Bremsspaltabschnitt etwa 0,05 mm beträgt. Dabei sind jeweils Abweichungen von +/- 50 % möglich. Insgesamt beträgt dann das radiale Spiel an einem haptischen Bedienknopf im Bereich der Wälzkörper das Doppelte des radialen Freiraums, da auf gegenüberliegenden Seiten des Kerns jeweils Wälzkörper angeordnet sind, insgesamt in diesem Beispiel 0,4 mm. Im Bereich des ersten Bremsspaltabschnitts mit einer Spalthöhe von 0,05 mm ergibt sich dann insgesamt ein radiales Spiel von 2 × 0,05 mm, also von 0,1 mm.

Aufgrund dieses sehr geringen Spiels kann wenigstens an dem Ende der haptischen Bedieneinrichtung mit der Scheibenkontur in vielen Fällen auf ein separates Lager verzichtet werden. Die Scheibenkontur übernimmt dann zusammen mit dem Mantelteil die Führung oder Lagerung des Mantelteils gegenüber dem Kern. Das ermöglicht eine nochmals einfachere und noch kostengünstigere Konstruktion.

In allen Ausgestaltungen kann die Innenkontur oder bevorzugt das Mantelteil unrund sein (z.B. elliptisch...). Auch kann der Kern exzentrisch zu dem Mantelteil gelagert sein. Dadurch ergibt sich bei der Drehung ein sich ändernder Relativspalt(abschnitt).

In besonders bevorzugten Ausgestaltungen sind die elektrischen Spulen axial zwischen dem ersten und dem zweiten Bremsspaltabschnitt angeordnet. Besonders bevorzugt grenzt wenigstens ein Bremsspaltabschnitt axial mittelbar oder unmittelbar an eine der elektrischen Spulen an.

In allen Ausgestaltungen ist es besonders bevorzugt, dass das Magnetfeld der Magnetkreisläufe wenigstens zum Teil jeweils axial durch den Kern und das Mantelteil und zu einem erheblichen Teil radial und besonders bevorzugt im Wesentlichen radial durch den dritten Bremsspaltabschnitt durchtritt. Weiterhin durchtritt das Magnetfeld der ersten elektrischen Spule zu einem erheblichen Teil radial und besonders bevorzugt im Wesentlichen radial durch den ersten Bremsspaltabschnitt und das der zweiten elektrischen Spule durch den zweiten Bremsspaltabschnitt. In einfachen Ausgestaltungen sind die elektrischen Spule jeweils um den Kern gewickelt und erzeugen in der axialen Richtung der Rotationsachse innerhalb des Kerns jeweils ein Magnetfeld, welches an den jeweiligen Enden der elektrischen Spulen radial nach außen geleitet wird und an einem axialen Ende durch die Scheibenkontur und den ersten bzw. zweiten Bremsspaltabschnitt und an dem anderen axialen Ende jeweils durch den dritten Bremsspaltabschnitt jeweils vom Kern in das Mantelteil bzw. umgekehrt übertritt. Eine solche Ausgestaltung erlaubt einen besonders einfachen, kostengünstigen und dennoch effektiven Aufbau.

Vorzugsweise bestehen die Wälzkörper wenigstens teilweise und insbesondere nahezu vollständig oder vollständig aus einem magnetisch leitenden Material.

Magnetisch nichtleitende Körper oder Wälzkörper können auch vorhanden sein. Nichtleitende Körper können als Platzhalter oder Führungselemente dienen und beliebige Formen aufweisen. So können zwischen den (magnetisch leitenden) Wälzkörpern magnetisch nichtleitende Körper angeordnet sein. Mehrere nichtleitende Körper (z. B. Führungselemente) können untereinander verbunden sein, z.B. in Form eines Käfigs. Dies erleichtert die Montage.

Besonders bevorzugt führt die Scheibenkontur das Mantelteil drehbar und dient als Lagerstelle.

Vorzugsweise ist zwischen den Bremskomponenten eine geschlossene Kammer ausgebildet. Insbesondere ist die geschlossene Kammer wenigstens zu einem erheblichen Anteil und insbesondere im Wesentlichen mit einem magnetorheologischen Medium wie einem magnetorheologischen Fluid und/oder z. B. (trockenem oder pulverförmigen) Carbonyleisenpulver gefüllt. Insbesondere ist die zweite Bremskomponente an der ersten Bremskomponente drehbar aufgenommen.

Die erste Bremskomponente umfasst vorzugsweise eine Achse, die wenigstens zu einem Teil aus einem nicht magnetisch leitfähigen Material ausgebildet ist. An der Achse oder einem Innenteil ist der Kern aus einem magnetisch leitfähigen Material befestigt.

Vorzugsweise ist die zweite Bremskomponente axial verschieblich an der ersten Bremskomponente aufgenommen. Das kann beispielsweise (auch) dazu dienen, einen Volumenausgleich bei Temperaturänderungen und/oder bei Leckage zu ermöglichen. Bevorzugt ist es, dass eine radiale und/oder axiale Position der beiden Bremskomponenten zueinander sensorisch erfasst wird.

In allen Ausgestaltungen ist es bevorzugt, dass an den einem und insbesondere dem distalen Ende der Kammer ein Klickelement angeordnet ist. Ein solches Klickelement ermöglicht insbesondere zwei Zustände, wobei nach dem Betätigen des Klickelements z. B. ein Blech hörbar und/oder taktil fühlbar umschaltet und dabei eine (geringe) axiale Verschiebung durchführt. Solche z. B. als Schnappteile oder Schnappscheiben ausgeführten Klickelemente sind beispielsweise von Tastaturen oder anderen Einrichtungen bekannt und ermöglichen eine kostengünstige und effektiv fühlbare Rückmeldung bei Betätigung eines Tasters oder dergleichen.

Vorzugsweise ist das Klickelement an einem Ende der Kammer angeordnet. Besonders bevorzugt trennt eine elastische Membran die Kammer von dem Klickelement. Das Klickelement kann als Schnappteil oder Schnappscheibe ausgeführt sein. Dadurch kann ein Volumenausgleich an der Kammer bereitgestellt werden, wenn die Achse in die Kammer weiter eintaucht oder wieder austaucht.

In besonders bevorzugten Weiterbildungen wird die Schnappscheibe so ausgebildet, dass eine Änderung des aufgespannten Volumens der Schnappscheibe zwischen den beiden Zuständen der Schnappscheibe an eine Querschnittsfläche der Achse multipliziert mit einem Axialversatz der Schnappscheibe bei Betätigung angepasst ist. Insbesondere unterscheiden sich die beiden Volumina um weniger als 50 % oder 25 % und vorzugsweise um weniger als 10 % oder weniger als 5 %. Eine derartige Ausgestaltung, bei der die Schnappscheibe an die Achse angepasst wird, sorgt dafür, dass nur ein geringes oder gegebenenfalls gar kein Volumen für einen Volumenausgleich bei der Betätigung der Schnappscheibe bereitgestellt werden muss.

Der Einsatz eines Klickelements oder Schnappteils am distalen Ende der Kammer in Zusammenhang mit der Ausbildung des ersten Bremsspaltabschnitts mit der Scheibenkontur ebenfalls nahe dem distalen Ende der Kammer ermöglicht eine besonders einfache und effektive Führung und Lagerung des Mantelteils, da nur ein geringes radiales Spiel vorliegt und die Scheibenkontur deshalb eine (in vielen Fällen) ausreichende Führung in radialer Richtung des Mantelteils übernehmen kann.

In bevorzugten Weiterbildungen ist eine Sensoreinrichtung oder wenigstens eine Sensoreinrichtung zur Erfassung eines relativen Drehwinkels zwischen dem Kern und dem Mantelteil umfasst.

Bevorzugt ist eine Sensoreinrichtung oder wenigstens eine Sensoreinrichtung zur Erfassung einer relativen Axialposition von dem Mantelteil zu dem Kern umfasst. Besonders bevorzugt umfasst die Sensoreinrichtung oder wenigstens eine Sensoreinrichtung wenigstens einen Magnetfeldsensor, der zur Erfassung eines Drehwinkels und einer Axialposition ausgebildet ist. In besonders vorteilhaften Ausgestaltungen umfasst die Sensoreinrichtung wenigstens einen Hall-Sensor.

In einfachen bevorzugten Ausgestaltungen wird der Magnetfeldsensor an der feststehenden Bremskomponente aufgenommen und wird einem in radialer Richtung wirkenden Magnetfeld ausgesetzt. Darüber kann über die Orientierung des Magnetfeldsensors relativ zu dem Magnetfeld ein Drehwinkel ermittelt werden. Eine axiale Verschiebung der Sensoreinrichtung relativ zu dem Mantelteil kann über eine Intensität der Magnetfeldstärke abgeleitet werden.

Ein Drehmomentsensor kann das Drehmoment messen.

Die von der Sensoreinrichtung erfassten Daten können von der Elektronik weiter verarbeitet werden und auch an externe Geräte weiter gegeben werden. Ist z.B. eine haptische Bedieneinrichtung als Drehknopf/Dreh-Drückknopf in einem Fahrzeug verbaut (im Lenkrad, in der Mittelkonsole, beim Bordcomputer etc.), zur Steuerung des Radios und/oder des Navigationssystems, zu Veränderung der Fahrwerkseinstellungen etc., können Daten über die Winkeländerung in einem Fahrzeug an den Bordcomputer/die Fahrzeugelektronik/die externe Elektronik übergeben werden. Daraus können Informationen über die Fahrbahnbeschaffenheit ermittelt werden und/oder es kann das Nutzerverhalten der Benutzer aufgezeichnet, ausgewertet und optimiert werden. Künstliche Intelligenz kann dann daraus den Wunsch des Benutzers ableiten und die Steuerung von Geräten optimieren/erleichtern.

Besonders bevorzugt ist wenigstens eine Abschirmeinrichtung zur wenigstens teilweisen Abschirmung der Sensoreinrichtung vor einem Magnetfeld der elektrischen Spule umfasst. Vorzugsweise umfasst die Abschirmeinrichtung wenigstens einen Abschirmkörper. Der Abschirmkörper ist insbesondere dazu ausgebildet, eine Magnetringeinheit zur Beaufschlagung des Magnetfeldsensors mit einem definierten (z. B. radialen) Magnetfeld von störenden Magneteinflüssen der elektrischen Spule abzuschirmen. Dazu gibt der Abschirmkörper die Magnetringeinheit vorzugsweise wenigstens abschnittsweise. Vorzugsweise umgibt die Abschirmeinrichtung die Magnetringeinheit nach drei Seiten, nämlich von beiden axialen Seiten und radial nach außen. Vorzugsweise umfasst die Abschirmeinrichtung wenigstens eine zwischen dem Abschirmkörper und der Magnetringeinheit angeordnete Trenneinheit. Dadurch wird das Magnetfeld der Magnetringeinheit von dem Abschirmkörper entkoppelt. Weiterhin ist vorzugsweise wenigstens eine zwischen dem Abschirmkörper und dem Mantelteil angeordnete magnetische Entkopplungseinrichtung umfasst. Vorzugsweise weisen die Trenneinheit und/oder die Entkopplungseinrichtung eine um ein Vielfaches geringere magnetische Leitfähigkeit als der Abschirmkörper auf. Vorzugsweise sind die Abschirmeinrichtung und die Magnetringeinheit voneinander beabstandet angeordnet.

Eine Abschirmeinrichtung ermöglicht eine erhebliche Verbesserung der Messqualität. Insbesondere sind dadurch feine Winkelauflösungen und geringe axiale Abstand erfassbar.

In allen Ausgestaltungen ist es bevorzugt, dass an dem Mantelteil ein Drehknopf oder ein Drehrad ausgebildet ist. Der Drehknopf kann durch eine Art Überzug ausgebildet sein.

Vorzugsweise ist wenigstens ein Leuchtmittel zu Beleuchtung eines wenigstens zum Teil transparent ausgebildeten Drehknopfs umfasst.

Vorzugsweise ist zwischen den einzelnen magnetisch polarisierbaren Partikeln eine magnetische Feldstärke von größer als 300 kA/m erzielbar. Jedenfalls wenn die elektrische Spule ein maximales Magnetfeld oder ein Magnetfeld im vorgesehenen Nennbereich erzeugt. Vorzugsweise ist die (erzeugbare) magnetische Feldstärke im Bremsspalt größer als 500 kA/m.

Die haptische Bedieneinrichtung oder eine haptische Bedien- oder Betätigungseinrichtung kann auch als Joystickeinrichtung oder Joystick ausgeführt sein. Eine Joystickeinrichtung oder sonstige haptische Bedieneinrichtung kann auch über ein Getriebe, einen Riemen (Zahnriemen/Flachriemen), ein Gestänge oder anderweitig über- oder untersetzt angebracht werden, sodass der Betätigungswinkel und der Drehwinkel der damit verbundenen Bremseinrichtung unterschiedlich sind.

In allen Ausgestaltungen ist es bevorzugt, dass wenigstens eine Antriebseinrichtung zur aktiven Drehung einer der Bremskomponenten umfasst ist. Dadurch kann nicht nur ein Bremsmoment erzeugt werden, sondern auch eine aktive Drehung erzielt werden, wodurch ein erweitertes haptisches Feedback gegeben werden kann. In allen Weiterbildungen und Ausgestaltungen der haptischen Bedieneinrichtung oder einer Bedien- oder Betätigungseinrichtung oder eines damit ausgerüsteten Geräts kann wenigstens eine Antriebseinrichtung zur aktiven Drehung einer der Bremskomponenten umfasst sein. Vorzugsweise ist der Bedienknopf, die Bedienwalze oder die Dreheinheit aktiv drehbar. Dadurch können dem Benutzer mehr haptische Informationen zurückgegeben werden.

Insbesondere umfasst die Antriebseinrichtung wenigstens einen Elektromotor. Der Elektromotor ist wenigstens zu einem überwiegenden Teil radial (und vorzugsweise auch axial) innerhalb eines von dem Spalt (insbesondere von den Bremsspaltabschnitten der Bremseinrichtung) definierten Außenumfangs angeordnet. Insbesondere sind wenigstens ein Rotor und/oder Stator des einen Elektromotors innerhalb eines solchen Außenumfangs angeordnet. Der Spalt umgibt in Bezug auf seinen Außenumfang den Elektromotor insbesondere radial und vorzugsweise auch axial.

Eine erfindungsgemäße Vorrichtung umfasst eine haptische Bedieneinrichtung, wie zuvor beschrieben, und kann insbesondere als Gerätekomponente oder Bedienknopf ausgebildet sein oder wenigstens eine solche Gerätekomponente oder einen solchen Bedienknopf umfassen.

Möglich ist es auch, dass zwei oder mehr haptischen Bedieneinrichtungen umfasst sind. Eine solche Vorrichtung oder Gerätekomponente kann eine Benutzerschnittstelle, ein Bedienpanel, ein Display, ein berührungsempfindliches Display mit oder ohne haptischem Feedback und/oder wenigstens einen Sensor oder weitere Ein- und Ausgabemöglichkeiten umfassen.

Die Benutzerschnittstelle kann insbesondere (auch) durch induktive Kopplung geladen werden. Da die äußere Bremskomponente, an der insbesondere der Drehknopf und damit auch die Benutzerschnittstelle befestigt sind, drehbar ist, können ohne Weiteres keine Kabel für die elektrische Anbindung zum Äußeren distalen Ende hinauf geführt werden. Eine Kontaktierung über Wickelfedern oder Schleifkontakte ist möglich, erhöht aber das Grundmoment und ist deshalb nicht besonders bevorzugt.

Im Bereich der LEDs bzw. Leuchtmittel kann eine elektrische Spule für eine induktive Kopplung angebracht werden, die sowohl für eine Energieübertragung als auch für die Datenübertragung genutzt werden kann. So können zur Benutzerschnittstelle induktiv die benötigte elektrische Energie und die Daten zur Anzeige übermittelt werden. Eine Datenkopplung ist auch über andere drahtlose Verfahren möglich.

Die Ansteuerung der Magnetspule erfolgt vorzugsweise meist oder überwiegend während der Betriebszeit mit einer Spannung von insbesondere 12V. Haptisch ist es (oft) von erheblichem Vorteil, wenn das Bremsmoment der magnetorheologischen Bremseinrichtung so schnell wie möglich den maximalen oder eingestellten Wert erreicht. Das ist manchmal nur mit einer größeren Spannung möglich. Ein maximales Bremsmoment wird generell durch ein maximales Magnetfeld im Bremsspalt erreicht. Da das Magnetfeld durch den Strom in der elektrischen Spule (Magnetspule) erzeugt wird, muss deshalb auch der Strom so schnell wie möglich auf maximalen Wert eingestellt werden. Grundsätzlich kann man die Spannung immer auf einen hohen Wert einstellen, im konkreten Fall statt auf z. B. 12V auf z. B. 24V. Dazu müssten jedoch alle Bauteile (elektrische Spule bzw. Magnetspule, der Spulendraht etc.) entsprechend anders ausgelegt werden (und z.B. ein Draht mit größerem Durchmesser verwendet werden).

Vorzugsweise wird in bevorzugten Ausgestaltungen und Weiterbildungen nur am Beginn einer haptischen Rückmeldung eine höhere Spannung eingestellt (als im Dauerbetrieb nötig wäre). Insbesondere am Beginn oder nahezu direkt nach einer haptischen Rückmeldung wird vorzugsweise für einen Zeitraum von zwischen 0,5 ms und 50ms, vorzugsweise in einem Zeitraum zwischen 1 ms und 20 ms und besonders bevorzugt zwischen 5 ms und 15 ms, eine höhere Spannung eingestellt (z. B. um den Faktor 1,1 oder 1,2 oder 1,5 oder 2 oder 3 höher als im Dauerbetrieb nötig wäre). Die höhere Spannung wird beibehalten, bis der Strom (bzw. das Magnetfeld) den gewünschten Folgewert oder Maximalwert (nahezu, z.B. zu 90% oder 95%) erreicht und/oder der Zeitraum erreicht oder überschritten wird, den die höhere Spannung wirken kann. Danach wird die Spannung auf die geringere Spannung von z. B. 12 V zurück geregelt. Das System reagiert schneller und das gewünschte Bremsmoment wird schneller eingestellt. Dadurch wird eine stärkere Angleichung an ein Rechteck erreicht. Es kann ein (näherungsweise) stufenförmiger Verlauf eingestellt werden.

Besonders bei modernen Elektroautos sind mehrere Spannungen im Fahrzeug vorhanden und hohe Ströme möglich, sodass diese nicht extra erzeugt bzw. transformiert werden müssen. Bei diesen Elektrofahrzeugen sind auch viel höhere Spannungen vorhanden (z.B. bis 800 Volt) und solche Stromstärken möglich, dass die zuvor beschriebenen Eigenschaften vorteilhaft genutzt werden können.

Ein offenbartes Verfahren dient zur Steuerung bzw. haptischen Steuerung einer Vorrichtung mit einer magnetorheologischen Bremseinrichtung mit zwei Bremskomponenten, wobei die beiden Bremskomponenten relativ zueinander kontinuierlich um eine Rotationsachse drehbar sind, wobei sich eine erste Bremskomponente entlang der Rotationsachse erstreckt und einen Kern aus einem magnetisch leitfähigen Material umfasst und wobei die zweite Bremskomponente ein sich um die erste Bremskomponente herum erstreckendes hohl ausgebildetes Mantelteil umfasst, wobei zwischen der ersten und der zweiten Bremskomponente wenigstens drei axial voneinander beabstandete und umlaufende und wenigstens zum Teil mit einem magnetorheologischen Medium gefüllte Bremsspaltabschnitte ausgebildet sind. Dabei erzeugt eine erste elektrische Spule ein (erstes) gesteuertes Magnetfeld in einem ersten Bremsspaltabschnitt. Unabhängig davon erzeugt eine zweite elektrische Spule ein (zweites) gesteuertes Magnetfeld in einem zweiten Bremsspaltabschnitt, um insbesondere abhängig von der Drehzahl unterschiedlich starke Bremswirkungen zu erzeugen. Dabei werden die Magnetfelder der ersten und der zweiten elektrischen Spule insbesondere beide über den dritten Bremsspalt geschlossen werden.

Ein weiteres offenbartes Verfahren dient zur haptischen Steuerung einer Vorrichtung mit wenigstens einer magnetorheologischen Bremseinrichtung. Die magnetorheologische Bremseinrichtung umfasst zwei (oder mehr) Bremskomponenten. Die beiden Bremskomponenten sind relativ zueinander bewegbar. Eine erste Bremskomponente umfasst einen Kern aus einem magnetisch leitfähigen Material. Zwischen der ersten und der zweiten Bremskomponente ist wenigstens ein wenigstens zum Teil mit einem magnetorheologischen Medium gefüllter Bremsspalt ausgebildet. Wenigstens eine elektrische Spule beaufschlagt den Bremsspalt mit einem gesteuerten Magnetfeld. Zur Erzielung einer schnellren und insbesondere stufenweisen Veränderung der Bremsintensität wird wenigstens ein Leistungsparameter wenigstens einer elektrischen Spule in einem ersten Zeitraum zu Beginn der Veränderung stärker verändert als zur Erzielung der angestrebten Bremsintensität dauerhaft nötig wäre.

Dieses weitere offenbartes Verfahren ist auch sehr vorteilhaft. Es erlaubt eine bessere Steuerung der Bremswirkung. Es kann insbesondere eine verbesserte Sprungantwort errreicht werden. Es sind stufenförmige(re) Verläufe der Bremswirkung möglich. Dadurch kann die Bremsintensität "rechteckiger" verlaufen als bei einer konventionellen Ansteuerung. Vorzugsweise wird wenigstens ein Leistungsparameter der elektrischen Spule in dem ersten Zeitraum wenigstens 10% oder 20% oder 30% oder 50% oder 100% stärker gegenüber dem Vorzeitpunkt verändert als in dem zweiten Zeitraum.

Insbesondere ist der zweite Zeitraum mehr als dreimal oder fünfmal so lang wie der erste Zeitraum. Vorzugsweise weist der erste Zeitraum eine Länge zwischen 3 ms und 30 ms und insbesondere zwischen 5 ms und 20 ms auf. Der erste Zeitraum kann in einer konkreten Ausgestaltung etwa 10 ms +/-5 ms betragen.

In bevorzugten Weiterbildungen werden zur Veränderung der Bremsintensität der Strom und/oder die Spannung der elektrischen Spule verändert. Besonders bevorzugt wird als Leistungsparameter die Spannung verändert.

Vorzugsweise wird die Leistung (der Leistungsparameter) von wenigstens zwei elektrischen Spulen verändert.

Der Bremsspalt kann wenigstens zwei oder drei Bremsspaltabschnitte umfassen. Es können auch mehr als zwei Bremsspalte vorgesehen sein. Insbesondere können wenigstens zwei Bremsspaltabschnitte mit Magnetfeldern unterschiedlicher elektrischer Spulen beaufschlagt werden.

Es ist möglich und bevorzugt, dass zur Bildung eines haptischen Anschlags oder eines fühlbaren Rasters Leistungsparameter (wenigstens ein Leistungsparameter, insbesondere die Spannung) wenigstens einer elektrischen Spule bei einer Erhöhung (gegenüber einem Vorzeitpunkt) für den ersten Zeitraum höher eingestellt wird als für den zweiten Zeitraum, der sich an den ersten Zeitraum anschließt und der länger ist als der erste Zeitraum.

In bevorzugten Weiterbildungen wird das Verfahren mit einer anmeldungsgemäßen Vorrichtung durchgeführt, wie es im Rahmen dieser Anmeldung offenbart wird. Deshalb kann eine solche Vorrichtung die in allen Ansprüchen beschriebenen Merkmale zum Teil oder vollständig aufweisen. Das Verfahren kann mit den im Rahmen dieser Anmeldung offenbarten Merkmalen durchgeführt werden. Auch eine entsprechende Verwendung ist möglich.

Eine offenbarte Verwendung beansprucht die Verwendung einer haptischen Bedieneinrichtung mit einer Bremseinrichtung, um insbesondere über einen größeren Drehzahlbereich ein gezieltes und vorzugsweise hohes Bremsmoment zu erzeugen. Die Bremseinrichtung umfasst eine erste Bremskomponente und eine zweite Bremskomponente. Die beiden Bremskomponenten sind relativ zueinander kontinuierlich um eine Rotationsachse drehbar. Eine erste Bremskomponente erstreckt sich entlang der Rotationsachse und umfasst einen Kern aus einem magnetisch leitfähigen Material. Die zweite Bremskomponente umfasst ein sich um die erste Bremskomponente herum erstreckendes hohl ausgebildetes Mantelteil. Zwischen der ersten und der zweiten Bremskomponente sind axial voneinander beabstandete und umlaufende und wenigstens zum Teil mit einem magnetorheologischen Medium gefüllte Bremsspaltabschnitte ausgebildet, wobei axial zwischen einem ersten Bremsspaltabschnitt und einem zweiten Bremsspaltabschnitt (wenigstens) ein dritter Bremsspaltabschnitt angeordnet ist. Dem ersten Bremsspaltabschnitt ist eine erste elektrische Spule und dem zweiten Bremsspaltabschnitt ist eine separat steuerbare zweite elektrische Spule zugeordnet, um unterschiedliche Bremsmomente gezielt zu erzeugen.

An einem ersten Bremsspaltabschnitt ist z. B. eine Scheibenkontur zwischen dem Mantelteil und dem Kern ausgebildet, um ein hohes Bremsmoment bei höheren Drehzahlen zu erzeugen. In einem zweiten Bremsspaltabschnitt ist z. B. eine Mehrzahl von Wälzkörpern auf dem Umfang des Kerns angeordnet, um ein hohes Bremsmoment bei kleineren Drehzahlen zu erzeugen. Dem ersten Bremsspaltabschnitt ist eine erste elektrische Spule zugeordnet und dem zweiten Bremsspaltabschnitt ist eine zweite elektrische Spule zugeordnet, um separat und (weitgehend) unabhängig voneinander ein Bremsmoment in den jeweiligen Bremsspaltabschnitten einzustellen. Beide Magnetfelder werden insbesondere über den dritten Bremsspaltabschnitt geschlossen.

Zur Verwendung wird insbesondere eine Ausgestaltung oder Weiterbildung einer haptischen Bedieneinrichtung oder einer Gerätekomponente verwendet, wie zuvor beschrieben oder im Rahmen der folgenden Ausführungsbeispiele offenbart.

In allen Ausgestaltungen kann die Bedien- oder Betätigungseinrichtung auch über ein Getriebe, Riemen (Zahnriemen/Flachriemen), Gestänge oder anderweitig über- oder untersetzt angebracht werden, sodass der Betätigungswinkel und der Drehwinkel der damit verbundenen Bremseinrichtung unterschiedlich sind.

Die haptische Bedieneinrichtung oder eine haptische Bedien- oder Betätigungseinrichtung kann auch als Joystickeinrichtung oder Joystick ausgeführt sein. Eine Joystickeinrichtung kann auch über ein Getriebe, einen Riemen (Zahnriemen/Flachriemen), ein Gestänge oder anderweitig über- oder untersetzt angebracht werden, sodass der Betätigungswinkel und der Drehwinkel der damit verbundenen Bremseinrichtung unterschiedlich sind.

In allen Weiterbildungen und Ausgestaltungen der haptischen Bedieneinrichtung oder einer Bedien- oder Betätigungseinrichtung oder eines damit ausgerüsteten Geräts kann wenigstens eine Antriebseinrichtung zur aktiven Drehung einer der Bremskomponenten umfasst sein. Vorzugsweise ist der Bedienknopf, die Bedienwalze oder die Dreheinheit aktiv drehbar. Dadurch können dem Benutzer mehr haptische Informationen zurückgegeben werden.

Die Erfindung ermöglicht es zum Beispiel, dass für das Bremsen im Stillstand (Blockieren) z.B. eine elektrische Spule bzw. ein (extra dafür ausgelegter) Magnetkreis verwendet wird, womit ein besonders hohes Bremsmoment erzeugbar ist. Dabei muss (im Stillstand bei hohen Momenten) oft die Reproduzierbarkeit nicht besonders genau sein, was den konstruktiven Aufwand und die Kosten verringert. Eine stillstehende Bremskomponente dreht sich ja nicht, solange das Bremsmoment hoch genug ist und nicht überschritten wird. Die andere elektrische Spule bzw. der andere Magnetkreis können dann z.B. dafür ausgelegt sein, im laufenden Betrieb beim Drehen die entsprechende Bremskomponente gezielt abzubremsen. Das erfordert regelmäßig eine höhere Reproduzierbarkeit, damit haptisch kein Unterschied oder nur ein geringer Unterschied zu merken ist. Meist erfordert das höhere Anforderungen an die konstruktiven Bedingungen und kann einen größeren technischen Aufwand erfordern und höhere Kosten bedingen. Die Erfindung ermöglicht beide Eigenschaften auf einfache Art und Weise und insgesamt eine kostengünstige Gestaltung.

In allen Ausgestaltungen kann die Vorrichtung oder haptische Bedieneinrichtung wenigstens zwei magnetorheologische Bremseinrichtungen umfassen. Insbesondere kann in allen Weiterbildungen wenigstens eine Antriebseinrichtung zur aktiven Drehung einer der Bremskomponenten umfasst sein.

Weitere Vorteile und Merkmale der vorliegenden Erfindung ergeben sich aus den Ausführungsbeispielen, welche im Folgenden mit Bezug auf die beiliegenden Figuren erläutert werden.

Darin zeigen:
- Figuren 1a-1b: schematische dreidimensionale Ansichten von haptischen Bedieneinrichtungen mit einer magnetorheologischen Bremseinrichtung;
- Figur 2: eine Seitenansicht einer haptischen Bedieneinrichtung mit einer magnetorheologischen Bremseinrichtung;
- Figuren 3a-3c: verschiedene Schnitte von haptischen Bedieneinrichtungen;
- Figuren 4a-4b: eine stark schematische Ansicht einer Sensoreinrichtung und von Messergebnissen;
- Figur 5: eine stark schematische Ansicht einer haptischen Bedieneinrichtung mit einer Schnappscheibe in unterschiedlichen Stellungen;
- Figur 6: zwei unterschiedlich ausgebildete elektrische Spulen;
- Figuren 7a+b: eine weitere haptische Bedieneinrichtung im Schnitt und in einer Perspektive;
- Figur 8: eine weitere haptische Bedieneinrichtung im Schnitt;
- Figur 9: eine stark schematische Schaltung zur Ansteuerung der elektrischen Spule;
- Figur 10: Drehmomentverläufe eines elektrischen Motors und einer magnetorheologischen Bremseinrichtung über der elektrisch eingebrachten Leistung;
- Figur 11: die sich ergebenden Bremsmomentverläufe einer magnetorheologischen Bremseinrichtung für zwei unterschiedliche Stromstärkenverläufe über der Zeit; und
- Figur 12: eine schematische Ansicht einer erfindungsgemäßen haptischen Bedien- oder Betätigungseinrichtung mit einer Antriebseinrichtung.

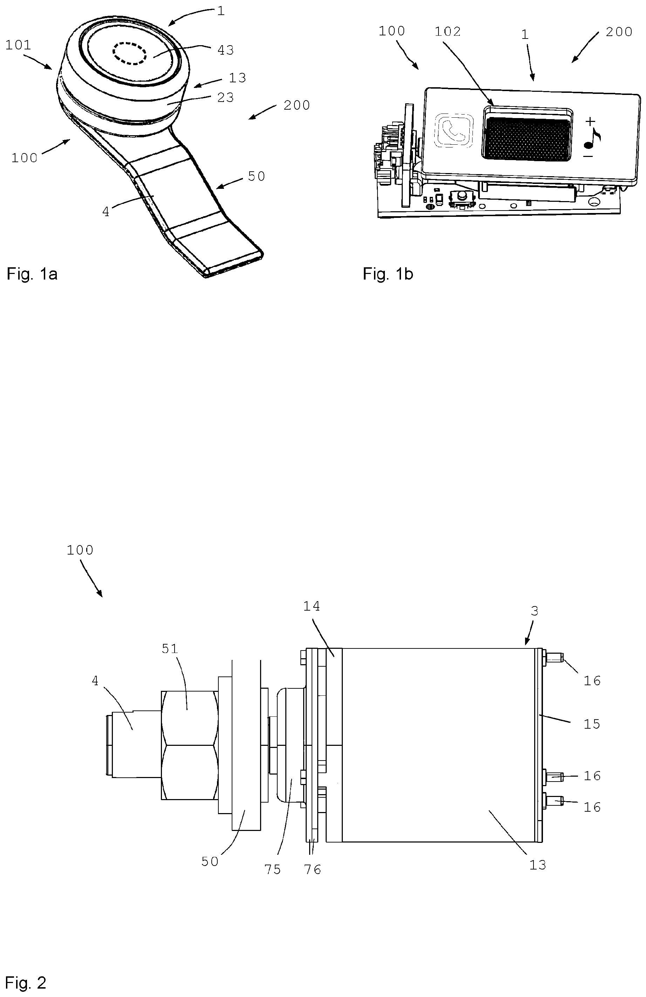

Figuren 1a und 1b zeigen zwei unterschiedliche erfindungsgemäße haptische Bedieneinrichtungen 100, die jeweils eine magnetorheologische Bremseinrichtung 1 umfassen und die an unterschiedlichen Gerätekomponenten 200 eingesetzt werden können.

Figur 1a zeigt einen haptischen Bedienknopf 101 als haptische Bedieneinrichtung 100. Der Bedienknopf 101 ist über eine als Halter 4 ausgebildete Konsole 50 befestigt und kann zum Beispiel in einem Kraftfahrzeug angebracht sein. Der Bedienknopf 101 wird über das Mantelteil 13 oder ein darauf angebrachtes Drehteil bedient. Eine Benutzerschnittstelle 43 kann zusätzlich genutzt werden, um Informationen zu übermitteln.

In Figur 1b ist die Gerätekomponente 200 als Daumenwalze 102 mit einer haptischer Bedieneinrichtung 100 dargestellt. Die Daumenwalze 102 ist bevorzugt beispielsweise in Lenkrädern von Kraftfahrzeugen oder dergleichen einsetzbar. Die Daumenwalze ist jedoch nicht auf diesen Anwendungsfall beschränkt. Die Daumenwalze 102 kann allgemein je nach Einbausituation auch mit jedem anderen Finger oder mit mehreren Fingern gleichzeitig benutzbar sein.

Eine haptische Bedieneinrichtung 100 kann beispielsweise zur Bedienung von Maschinen, Medizingeräten, Computerspielen, Musikterminals, Eingabegeräten oder zur Verwendung in und für ein Kraftfahrzeug eingesetzt werden. In einem Kraftfahrzeug kann die haptische Bedieneinrichtung 100 beispielsweise zur Bedienung von Klimaanlagen, Radios, dem Entertainment, der Navigation, der Distanzkontrolle, dem Fahrassistenten, der Rekuperationseinstellung, zur Einstellung der Sitze und zur Bedienung des Infotainments eingesetzt werden. Möglich ist auch der Einsatz an sonstigen Geräten oder anderen Vorrichtungen.

Figur 2 zeigt eine Seitenansicht einer haptischen Bedieneinrichtung 100, die als Bedienknopf 101 eingesetzt werden kann. Die haptische Bedieneinrichtung 100 umfasst einen Halter 4, der über eine Mutter 51 beispielsweise an einer Konsole 50 befestigt werden kann. Die haptische Bedieneinrichtung 100 umfasst eine magnetorheologische Bremseinrichtung 1 mit zwei Bremskomponenten 2, 3, von denen die hier innere Bremskomponente 2 in Figur 2 nicht sichtbar ist. Die innere Bremskomponente 2 ist mit dem Halter 4 verbunden. Der Halter 4 und die innere Bremskomponente 2 sind hier feststehend ausgebildet. Die andere Bremskomponente 3 umfasst das Mantelteil 13 und ist rotierbar an der ersten Bremskomponente 2 aufgenommen.

Die haptische Bedieneinrichtung 100 ist kompakt aufgebaut und verfügt im Inneren der Abschirmeinrichtung 75, die über einen hier zweiteiligen Abschirmkörper 76 als Abschirmgehäuse verfügt, über eine hier nicht erkennbare Sensoreinrichtung 70 zur Erfassung der Drehposition und der Axialposition des Mantelteils 13. Über Stifte 16 ist das Mantelteil 13 mit einem linken Deckel 14 und einem rechten Deckel 15 verbunden, um eine innere geschlossene Kammer 110 abzudichten.

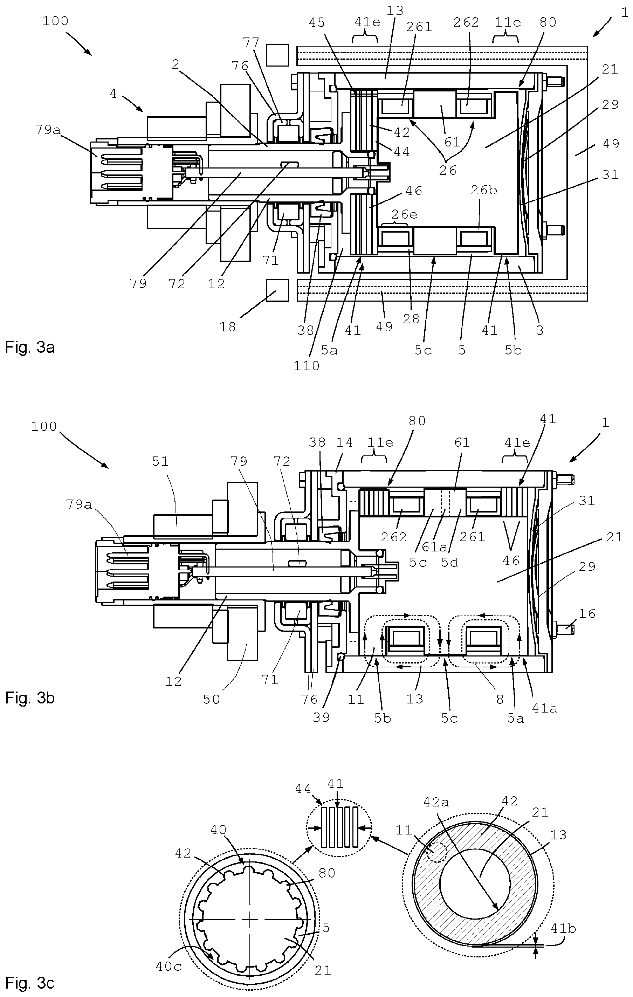

In den Figuren 3a bis 3c sind mögliche Querschnitte einer erfindungsgemäßen haptischen Bedieneinrichtung 100 z. B. aus Figur 2 abgebildet. Dabei verfügt die haptische Bedieneinrichtung 100 über eine magnetorheologische Bremseinrichtung 1. An dem Halter 4 ist die Bremskomponente 2 aufgenommen, die sich in axialer Richtung erstreckt und an der der Kern 21 befestigt ist. Radial umgeben wird der Kern 21 von dem (magnetisch leitenden) Mantelteil 13 als äußerer oder zweiter Bremskomponente 3.

Der magnetisch leitende Kern 21 ist von zwei elektrischen Spulen 26 umgeben, die um den Kern 21 herumgewickelt sind. Die erste elektrische Spule 261 erstreckt sich über eine axiale Breite 26e. An dem dem Halter 4 zugewandten Ende des Kerns 21 ist eine Scheibenkontur 41 ausgebildet, die hier auf den Kern aufgebracht und z. B. aufgepresst ist. Die Scheibenkontur 41 weist hierzu einen hohlzylindrisch ausgebildeten Scheibenkörper 42 auf. Die Aufnahme an dem Kern kann auch unrund ausgebildet sein.

Der Kern 21 kann insbesondere aus gesintertem Material (Metall) hergestellt werden. Der Kern kann so einfacher in gewünschter Form gefertigt werden.

Der Scheibenkörper 42 besteht hier aus einem Scheibenpaket 44, welches durch eine Mehrzahl von dünnen Scheibenblechen 46 gebildet wird. Hier sind die Scheibenbleche 46 jeweils als Stanzteil ausgebildet und können zum Beispiel aus einem magnetisch leitenden Blech von 1 mm oder 2 mm oder auch 3 mm Dicke ausgestanzt werden. So kann einfach und kostengünstig die benötigte Anzahl von Scheibenblechen ausgestanzt werden, um die gewünschte Dicke des Scheibenkörpers 42 zu erzeugen.

Die einzelnen Scheibenbleche 46 werden miteinander verpresst und auf den Kern 21 aufgebracht und damit zum Beispiel verschraubt oder verpresst. Es verbleibt ein Bremsspaltabschnitt 5a im Bereich des Scheibenkörpers 42 mit einer geringen Spalthöhe 41b zwischen dem Außendurchmesser der Scheibenkontur 41 und dem Innenumfang des Mantelteils 13. Die axiale Breite 41e der Scheibenkontur 41 bzw. dessen Bremsspaltabschnitt 5a wird hier durch die Anzahl der Scheibenbleche 46 bestimmt und kann größer oder auch kleiner als dargestellt gewählt werden.

Die Scheibenkontur 41 grenzt hier axial unmittelbar an die erste elektrische Spule 261 an, die in einem Spulenhalter 26b aufgenommen ist und radial außen durch eine Vergussmasse 28 vollständig abgedichtet ist.

Der Scheibenkörper 42 ist mit dem Kern 21 und mit dem feststehenden Bremskomponente 2 verbunden und dreht sich im Betrieb nicht. Das ermöglicht die Bildung einer Loches oder einer Aussparung zur Durchführung der Kabel 45 zum elektrischen Anschluss der ersten und zweiten elektrischen Spulen 261, 262. Die elektrischen Spulen 261, 262 können dadurch einfach kostengünstig und schnell angeschlossen werden.

Die Scheibenkontur 41 ist hier am proximalen Ende, also an dem Ende des Kerns 21, der dem Halter 4 zugewandt ist, ausgebildet. An dem distalen Ende, also an dem anderen Ende des Kerns 21, ist ein zweiter Bremsspaltabschnitt 5b ausgebildet. Der zweite Bremsspaltabschnitt 5b erstreckt sich über eine axiale Breite 11e. Dort ist die Scheibenkontur 41 einstückig mit dem Kern 21 ausgebildet. Die Scheibenkontur 41 steht in der Art eines umlaufenden Flansches radial nach außen ab. Die Scheibenkontur kann eine zylindrische Außenkontur oder auch eine unrunde Außenkontur aufweisen. Radiale Verengungen können eine Art von Magnetfeldkonzentratoren 80 zur lokalen Verstärkung des Magnetfeldes beim Durchtritt durch den zweiten Bremsspaltabschnitt 5b bilden.

Durch den zweiten Bremsspaltabschnitt 5b kann mit der zweiten elektrischen Spule 262 insbesondere bei einem unrunden Außenquerschnitt ein sehr hohes Bremsmoment insbesondere bei niedrigen Drehzahlen des Mantelteils 13 erreicht werden. Durch den ersten Bremsspaltabschnitt 5a im Bereich der Scheibenkontur 41 kann mit der ersten elektrischen Spule 261 bei hohen Drehzahlen ein immer noch starkes Magnetfeld von dem Kern 21 in das Mantelteil 13 übertragen werden, da die Spalthöhe 41b erheblich geringer sein kann als der radiale Freiraum 11c im Bereich des Bremsspaltabschnitts 5b beträgt. Dadurch wird ein hohes Drehmoment erzeugbar, welches insbesondere auch bei höheren Drehzahlen ermöglicht wird. Dadurch kann durch gezielte und separate Ansteuerung der beiden elektrischen Spulen 261, 262 über den gesamten Drehzahlbereich ein hohes und jeweils fein justierbares Drehmoment zur Verfügung gestellt werden. Auch bei identischen Außenkonturen und Bremsspaltkonturen kann durch Kombination beider Bremsmomente ein sehr hohes Bremsmoment erzeugt werden.

Die axiale Breite 11e des zweiten Bremsspaltabschnitts 5b und die Breite 41e des ersten Bremsspaltabschnitts 5a sind hier etwa gleich (+/-25 %) und jeweils kürzer als eine axiale Breite des dritten Bremsspaltabschnitts 5c. Insgesamt wird ein sehr kompakter Aufbau erreicht.

Das Mantelteil 13 ist in Figur 3a von einem Überzug 49 als Drehknopf 23 umgeben. Der Drehknopf 23 ist wenigstens zum Teil transparent ausgebildet, um durch die Leuchtmittel 18 in Form von zum Beispiel LEDs beleuchtet werden zu können. Die Beleuchtung kann dabei situationsabhängig oder auch situationsunabhängig gesteuert werden.

Am vorderen Ende wird die geschlossene Kammer 110 im Inneren des Mantelteils 13 durch einen vorderen Deckel 14 abgeschlossen, durch den die Bremskomponente 2 durchgeführt wird. Eine Dichtung 38 dient zur Abdichtung. Am hinteren oder distalen Ende wird die Kammer 110 zunächst durch eine elastische Membran 31 begrenzt, an die sich nach außen ein hier als Schnappscheibe ausgebildetes Klickelement 29 anschließt.

Durch axiale Betätigung des Drehknopfes 23 wird die Schnappscheibe bzw. das Klickelement betätigt und das Mantelteil 13 wird insgesamt etwas nach links bewegt. Diese Axialbewegung kann durch die Sensoreinrichtung 70 mit dem Magnetfeldsensor 72 im Inneren des Halters bzw. der ersten Bremskomponente 2 erfasst werden, die radial von einer Magnetringeinheit 71 umgeben ist. Der Magnetfeldsensor 72 ist insbesondere als Hall-Sensor 72 ausgeführt und detektiert die Ausrichtung des radialen Magnetfeldes relativ zu dem Magnetfeldsensor 72. Darüber kann eine Winkelstellung des Mantelteils 13 relativ zu dem Kern 21 erfasst werden. Eine axiale Verstellung des Mantelteils 13 durch Betätigung des Klickelements 29 führt zu einem relativen Axialversatz zwischen der Magnetringeinheit 71 und dem Magnetfeldsensor 72, was eine Intensitätsveränderung des detektierten Signals bedingt. Darüber kann eine Betätigung des Klickelements erfasst werden.

Figur 3b zeigt eine leicht andere Darstellung einer haptischen Bedieneinrichtung 100 mit einer magnetorheologischen Bremseinrichtung, wobei hier im Unterschied zu Figur 3a der Überzug 49 bzw. der Drehknopf 23 weggelassen wurde.

Ein wesentlicher Unterschied zwischen den Figuren 3a und 3b besteht darin, dass in dem oberen Teil von Figur 3b der erste Bremsspaltabschnitt 5a und der zweite Bremsspaltabschnitt 55 jeweils eine separate Scheibenkontur 41 außen auf dem Kern aufweisen. In Figur 3a ist nur am proximalen Ende eine separate Scheibenkontur 41 ausgebildet.

In Figur 3b ist in der unteren Hälfte eine Ausführungsform dargestellt, bei der die von dem Kern 21 radial abstehenden Scheibenkonturen an den Bremsspaltabschnitten 5a, 5b und 5c integral (d. h. einstückig) mit dem Kern gefertigt sind.

Bei dieser Ausgestaltung kann beispielsweise außerhalb der Kammer 110 zwischen der Dichtung 38 und der Sensoreinrichtung 70 noch ein Lager zur Lagerung des Mantelteils 13 gegenüber der Bremskomponente 2 vorgesehen sein. Möglich ist es aber hier auch, dass die Lagerung an einem Ende nur über die Dichtung 38 und am anderen distalen Ende nur über die Scheibenkontur 41 erfolgt.

Die Scheibenkontur 41 kann (umlaufend) einstückig mit dem Kern ausgebildet sein, wie es im unteren Teil von Fig. 3b schematisch dargestellt ist. Oder die Scheibenkontur 41 umfasst ein (umlaufendes) Scheibenpaket mit mehreren Scheibenblechen 46, wie es beispielhaft im oberen Teil von Fig. 3b dargestellt ist. Die Scheibenkontur kann auch als massives separates Teil auf den Kern aufgesetzt sein, also praktisch aus einem einzigen Scheibenblech entsprechend größerer Dicke bestehen.

Beispielhaft eingezeichnet sind in Figur 3b einige Magnetfeldlinien 8 der ersten elektrischen Spule 261 und der zweiten elektrischen Spule 262, die den weitgehend axialen Verlauf der Magnetfeldlinien in dem Kern 21 und in dem Mantelteil 13 zeigen. Weiterhin ist auch zu erkennen, dass in den Bremsspaltabschnitten 5a und 5b jeweils ein (in etwa) radialer Durchtritt der Magnetfeldlinien 8 erfolgt.

Wenn in dem Bremsspaltabschnitt 5a eine als Sternkontur ausgebildete Scheibenkontur angeordnet ist, kann in dem Bremsspaltabschnitt 5b bei höheren Drehzahlen ein höheres Drehmoment erzeugt werden, während in dem Bremsspaltabschnitt 5a bei niedrigeren Drehzahlen ein höheres Moment erzeugt wird. Geschlossen wird das jeweilige Magnetfeld jeweils im zentralen Bereich durch den (in etwa) radialen Übertritt an dem dritten Bremsspaltabschnitt 5c. An dem Bremsspaltabschnitt 5c liegt praktisch ein dünner Spalt vor, ähnlich zu dem ersten Bremsspaltabschnitt, wenn dort eine zylinderförmige Scheibenkontur 41 eingesetzt wird.

Der Magnetfeldsensor 72 ist auf einer Sensorplatine 79 angebracht und kann über die Kontaktpins 79a kontaktiert werden. Darüber wird auch die elektrische Spule 26 mit Strom versorgt.

Wenigstens in dem Bereich der Sensoreinrichtung 70 und des Magnetfeldsensors 72 ist die innere Bremskomponente 2 vorzugsweise aus einem wenig oder nicht magnetisch leitenden Material ausgebildet, um eine möglichst ungestörte Detektion der Orientierung und der Intensität des Magnetfeldes der Magnetringeinheit 71 im Inneren der Achse 12 bzw. der ersten Bremskomponente 2 zu gewährleisten. Dort ist die Sensoreinrichtung 70 besonders geschützt aufgenommen (Schutz vor Wasser und Staub).

In Figur 3b ist ein O-Ring 39 zu erkennen, der den Deckel 14 gegenüber dem Mantelteil 13 abdichtet.

Der dritte Bremsspaltabschnitt 5c ist an der Ringkontur 61 ausgebildet. Die Ringkontur 61 kann als separater Ring auf den Kern 21 aufgeschoben oder aufgebracht sein (Fig. 3b oben) oder die Ringkontur 61 ist einstückig mit dem Kern 21 ausgebildet (Fig. 3b unten). Jedenfalls ist die Ringkontur 61 magnetisch leitend mit dem Kern 21 gekoppelt.

Rein schematisch zeigt Figur 3b in der oberen Hälfte noch eine alternative Ausführung, bei der ein vierter Bremsspaltabschnitt 5d integriert ist. Der vierte Bremsspaltabschnitt 5d kann z. B. dadurch entstehen, dass die Ringkontur 61 zwei voneinander getrennte Bremsspaltabschnitte 5c und 5d zur Verfügung stellt. Beispielsweise können zwei magnetisch leitfähige Ringteile umfasst sein, die durch ein magnetisch weniger leitfähiges Zwischenteil oder Ringteil 61a voneinander getrennt sind. Dann werden zwei axial getrennte Bremsspaltabschnitte 5c und 5d ausgebildet. In anderen Ausgestaltungen können die elektrischen Spulen 261, 262 und die Bremsspaltabschnitte 5c, 5d auch weiter voneinander getrennt angeordnet sein, sodass zwei weiter voneinander getrennte Magnetkreisläufe entstehen.

Ein Aufbau mit drei Bremsspaltabschnitten, wobei der mittlere Bremsspaltabschnitt 5c für beide elektrische Spulen 261, 262 vorgesehen ist, ermöglicht einen besonders kompakten Aufbau.

Ein Aufbau wie in Figuren 3a oder 3b dargestellt, stellt eine vorteilhafte Ausgestaltung zur Verfügung. Die zweite elektrische Spule 262 ermöglicht ein besonders starkes Bremsmoment im zweiten Bremsspaltabschnitt 5b, insbesondere bei niedrigen Drehzahlen oder im Stillstand. Je nach Konstruktion, ermöglicht die erste elektrische Spule 261 bei höheren Drehzahlen ein hohes Bremsmoment über die sehr geringe Spalthöhe in dem ersten Bremsspaltabschnitt 5a.

Soll eine Drehbewegung abgebremst werden und ein Anschlag zur Verfügung gestellt werden, so ermöglicht die erste elektrische Spule 261 an dem ersten Bremsspaltabschnitt 5a bei höheren Drehzahlen eine stärkere Abbremsung als die zweite elektrische Spule 262 an dem zweiten Bremsspaltabschnitt 5b. Bei einer relativ geringen Übergangsdrehzahl wird das mit der zweiten elektrische Spule 262 an dem zweiten Bremsspaltabschnitt 5b erzeugbare Bremsmoment größer als das an dem ersten Bremsspaltabschnitt 5a bei dieser Drehzahl erzeugbare Bremsmoment. Das liegt daran, dass das über eine Sternkontur das erzeugbare Bremsmoment stärker von der Drehzahl abhängt und mit höheren Drehzahlen abfällt. Über eine Kombination unterschiedlicher Bremsspaltabschnitte 5a, 5b können so für verschiedene Drehzahlen jeweils optimale Bedingungen eingestellt werden. Bei gleichen Bremsspaltabschnitte 5a, 5b kann durch die Zuschaltung oder Abschaltung das Bremsmoment gesteuert werden.

Figur 3c zeigt grundsätzlich schematische Querschnitte der Bremsspaltabschnitte 5a und 5b und 5c. Dabei ist links der erste oder zweite Bremsspaltabschnitt 5a, 5b dargestellt, wobei im Inneren der Kern 21 zu sehen ist, auf dem eine Sternkontur angeordnet sind. Außen ist das Mantelteil 13 angeordnet.

In der Kammer 110 ist ein magnetorheologisches Medium aufgenommen, welches magnetorheologische Partikel 19 umfasst. In der Kammer 110 ist zwischen den Bremskomponenten 2 und 3 ein Spalt 5 vorgesehen. An dem Spalt 5 sind die drei Bremsspaltabschnitte 5a, 5b und 5c ausgebildet. Die Kammer 110 ist hier wenigstens teilweise mit einem magnetorheologischen Medium 6 gefüllt. Das Medium ist hier vorzugsweise ein magnetorheologisches Fluid, welches beispielsweise als Trägerflüssigkeit ein Öl umfasst, in dem ferromagnetische Partikel 19 vorhanden sind. Glykol, Fett, Wasser und dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel 19 in die Kammer 110 gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung der Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße auch deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die magnetorheologischen Partikel können für diesen Anwendungsfall nicht nur aus Carbonyleisenpulver (Reineisen), sondern z. B. auch aus speziellem Eisen (härterem Stahl) hergestellt werden.

Es ist möglich, dass lediglich durch das Magnetfeld beeinflussbare Partikel in den Spalt 5 bzw. die Kammer 110 gefüllt werden, wobei gegebenenfalls Luft oder ein Inertgas zugegeben wird. Wenn z. B. nur Luft oder auch ein anderes Gas verwendet wird, können verschiedene Feststoffe dazu gemischt werden, um gewisse Eigenschaften zu verbessern. Z. B. kann Graphitpulver beigemischt werden, um die Reibung zwischen den Carbonyleisenpartikeln zu verringern, da Graphit eine schmierende Wirkung zeigt. Die Partikel können insbesondere mit PTFE beschichtet werden. Eine Beschichtung mit PTFE oder eine vergleichbare Beschichtung verhindert insbesondere, dass die Partikel verklumpen und größere Haufen bilden. Solche größeren Haufen zerfallen nicht leicht oder unter Umständen gar nicht mehr. Alternativ können auch die Scheibenkörper oder Walzkörper mit PTFE beschichtet werden, damit die Reibung verringert wird. Bei Verwendung von MRF ohne Öl oder anderes Flüssiges als Trägermedium muss sichergestellt werden, dass kein Wasser in der Bremskammer (MR-Raum oder MRF-Raum) kondensiert. Z. B. kann Kieselsäuregel (bekannt als Silikagel) oder ein anderes Trocknungsmittel dazu gemischt werden, welches Wasser absorbiert und so seiner Umgebung Feuchtigkeit entzieht.

In allen Ausgestaltungen, Weiterbildungen und Ausführungsbeispielen kann vorzugsweise Pulver ohne Trägerflüssigkeit verwendet werden. Dann ist die Verwendung von bis zu etwa 80 Volumenprozent Carbonyleisen (Eisenpulver) möglich, was das Bremsmoment stark erhöht, wenn die restlichen Auslegungsparameter darauf angepasst werden (z.B. sollte die Feldstärke pro Partikel hierbei in etwa gleichbleiben wie bei einer magnetorheologischen Flüssigkeit (MRF), d.h. die Feldstärke im Bremsspaltabschnitt bzw. Bremsspalt bzw. Wirkspalt sollte beim Wechsel von z.B. LORD MRF 140 (40 Volumenprozent Carbonyleisen mit z.B. Öl als Trägerflüssigkeit) zu 80% Carbonyleisenpulver (ohne Trägerflüssigkeit) doppelt so hoch sein. Wir sprechen hier von magnetischen Feldstärke im Spalt von größer 200 kA/m bis auf Werte von bis zu 1.000 kA/m (1000000 A/m) oder mehr. Ein weiterer Vorteil von Pulver als Medium im Wirkspalt ist, dass es so zu keiner Sedimentation und auch keiner Haufenbildung im Sinne von "die Eisenpartikel bei MR-Flüssigkeiten werden in Richtung des Magnetfeldgradienten gezogen (die Kraft auf magnetisierbare Partikel wirkt immer in Richtung des stärkeren Magnetfelds, das Trägermedium wird verdrängt)" kommen muss, um so hohe Partikelkonzentrationen zu erhalten. Die maximale Partikelkonzentration liegt so schon an. Dies verbessert die Reproduzierbarkeit der Momente (es stellt sich bei gleichem Strom immer ein ähnliches Bremsmoment ein).

In allen Ausgestaltungen ist es besonders bevorzugt, dass die magnetisch polarisierbaren Partikel (insbesondere bei Verwendung als "trockenes" Pulver) (zu einem erheblichen Teil) unrunde Partikel umfassen (nicht sphärische Partikel), bei denen ein Verhältnis von größtem Durchmesser zur größten Quererstreckung senkrecht dazu größer 1,25 oder 1,5 beträgt. Möglich ist die Bildung dieses Verhältnisses auch als ein Verhältnis von größter Längserstreckung zur größten Quererstreckung, wobei insbesondere die Längs- und Quererstreckungen senkrecht zueinander gemessen werden.

Der Einsatz von unrunden Partikeln ist besonders vorteilhaft, da diese eine effektive Verkantungsstruktur ermöglichen, da sich jeweils unterschiedliche unrunde Abschnitte der Partikel miteinander verklemmen bzw. miteinander verkeilen.

Möglich und bevorzugt sind auch Verhältnisse von größtem Durchmesser zu größter Quererstreckung senkrecht dazu von 1,75 oder 2,0 oder mehr.

Vorzugsweise ist wenigstens ein Teil der magnetisch polarisierbaren Partikel dazu ausgebildet, sich unter dem Einfluss des Magnetfeldes flächig miteinander zu verklemmen oder zu verkeilen. Das ist beispielsweise bei Partikeln möglich, die abschnittsweise eckig oder beispielsweise insgesamt dreieckig oder mehreckig oder dergleichen ausgebildet sind. Dann verklemmen zwei (oder mehr) entsprechend ausgestaltete Partikel miteinander und können eine sehr effektive Verklumpung der Partikel miteinander und Verklemmung und Abbremsung der beiden Brems- bzw. Kupplungskomponenten miteinander bewirken.

Vorzugsweise ist wenigstens ein Teil der magnetisch polarisierbaren Partikel dazu ausgebildet, sich unter dem Einfluss des Magnetfeldes an zwei oder mehr voneinander beabstandeten Stellen miteinander zu verklemmen bzw. zu verkeilen. Solche Partikel, die unrund ausgestaltet sind, erlauben eine sehr effektive Erhöhung der Bremskraft bzw. des Bremsmomentes, da sie im Unterschied zu sphärischen Partikeln sich nicht nur an einer Stelle bzw. in einem kleinen Winkelbereich berühren, sondern an mehreren Stellen oder sogar flächig.

Vorzugsweise weist wenigstens ein Teil der magnetisch polarisierbaren Partikel wenigstens einen Muldenabschnitt auf. Ein solcher nach innen gewölbter Muldenabschnitt erlaubt eine besonders effektive Verkeilung mit Teilen anderer Partikel.

Vorzugsweise ist wenigstens eine an den Bremsspalt angrenzende Oberfläche wenigstens einer Kupplungs- bzw. Bremskomponente wenigstens abschnittsweise unglatt oder (lokal) uneben ausgebildet. Möglich ist es auch, dass die Partikel oder ein erheblicher Teil der magnetisch polarisierbaren Partikel regelmäßig oder unregelmäßig auf der äußeren Oberfläche Erhebungen oder Erhöhungen und/oder Vertiefungen aufweisen. Dadurch kann eine Verkantung mit den Partikeln verstärkt werden. Beispielsweise kann wenigstens eine Oberfläche Erhöhungen und/oder Vertiefungen in der Art von spitz oder abgerundet ausgebildeten Dimpels bei Golfbällen aufweisen. Möglich ist auch eine Oberfläche mit einem spitz oder abgerundet ausgebildeten Sägezahnprofil. Eine relative Höhe (wenigstens einiger) der Erhebungen oder Vertiefungen beträgt vorzugsweise wenigstens 5% oder 10% des minimalen Durchmessers eines magnetisch polarisierbaren Partikels.

Es hat sich herausgestellt, dass eine besonders effektive Verkantung und Verklemmung einzelner Partikel mit hohen magnetischen Feldstärken erzeugbar ist. Dazu wird vorzugsweise eine magnetische Feldstärke von größer als 150 Kiloampere/Meter (kA/m) oder von 250 Kiloampere/Meter oder 500 kA/m oder mehr in dem Bremsspalt erzeugt. Insbesondere ist eine magnetische Feldstärke von größer als 500 Kiloampere/Meter (kA/m) oder von 750 Kiloampere/Meter oder 1000 kA/m oder mehr in dem Bremsspalt erzeugbar bzw. wird dort erzeugt.

Wenn nur Pulver ohne flüssiges Trägermedium verwendet wird, kann die eine andere Dichtungsart gewählt und die Grundreibung dadurch verringert werden. Die Dichtung muss nicht so stark an die Oberflächen gepresst werden, da nicht für Flüssigkeiten abgedichtet werden muss, sondern nur Partikel. Es kann auch z.B. berührungsfreie Wellendichtung wie eine Labyrinthdichtung verwendet werden. Diese Art von Dichtung liegt nur auf einem der beiden zueinander drehenden Teile auf. Zusätzlich ist die Temperaturabhängigkeit verringert bzw. fast aufgehoben. Flüssige Trägermedien verändern ihre Viskosität mit sich verändernden Temperaturen, während Carbonyleisenpulver in sehr großen Temperaturbereichen seine Eigenschaften kaum ändert (bis zum Erreichen der Curie-Temperatur). Die temperaturbedingte Volumensänderung ist bei Pulver auch vernachlässigbar, da sich die Partikel untereinander umverteilen können, wenn sich das Volumen der einzelnen Partikel verändert.

Der maximale Volumensanteil von Carbonyleisenpartikeln ist in Pulverform (ca. 74%) auch höher als in MRF mit z.B. Öl als Trägermedium.

Die magnetorheologischen Partikel 19 verketten sich bei angelegtem Magnetfeld, wie in Figur 3c links sehr schematisch abgebildet. Dadurch tritt ein Keileffekt auf, der bei geringen und mittleren Drehzahlen zu einer erheblichen Verstärkung des Bremsmomentes führt.

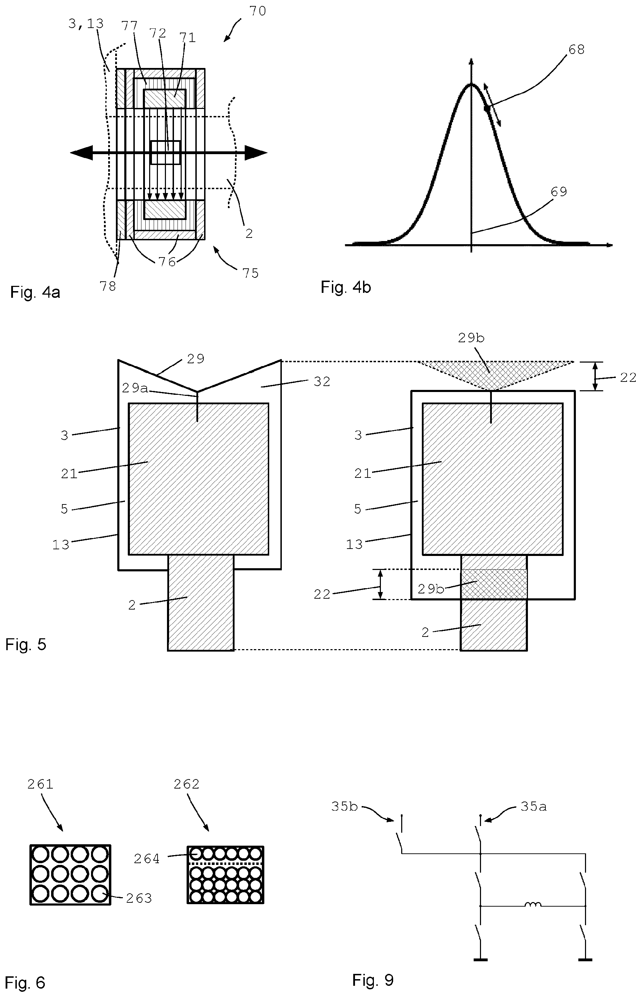

Zur näheren Erläuterung dieses Effekts wird auf die Figur 4 der internationalen Anmeldung WO 2018/215350 A1 der Anmelderin verwiesen, die bezüglich der Erklärung des Effekts in angepasster Weise vollständig in den Offenbarungsumfang dieser Anmeldung aufgenommen wird.

In Figur 3c rechts abgebildet ist ein Querschnitt durch den ersten oder auch den dritten Bremsspaltabschnitt 5a, 5c in dem Bereich der Scheibenkontur 41. Die Scheibenkontur 41 stellt einen Scheibenkörper 42 zu Verfügung, der hier auf den Kern 21 aufgebracht ist oder einstückig als Ringflansch daran ausgebildet ist. Radial außen zwischen der Außenkontur der Scheibenkontur 41 und dem Innenumfang des Mantelteils 13 ergibt sich eine Spalthöhe 41b, die erheblich geringer ist und erheblich geringer gewählt werden kann als der radiale Freiraum 11c in dem zweiten Bremsspaltabschnitt 5b. Der Scheibenkörper 42 kann massiv gestaltet sein oder kann als Scheibenpaket 44 ausgebildet sein und eine Mehrzahl von Scheibenblechen 46 umfassen. Der erste und der dritte Bremsspaltabschnitt 5a, 5c können grundsätzlich identische oder ähnliche Querschnitte aufweisen.

Nur beispielhaft ist in dem rechten Teil von Figur 3c ein Wälzkörper 11 gestrichelt abgebildet, um die Unterschiede zu verdeutlichen. Klar erkennbar ist, dass bei dem Scheibenkörper 42 einer Spalthöhe 41b mit geringerer Höhe ermöglicht wird. Dadurch kann dort ein starkes Bremsmoment und eine hohe Magnetfeldstärke erreicht und übertragen werden. Unabhängig kann über die andere elektrische Spule in dem zweiten Bremsspaltabschnitt 5b eine gewünschte Magnetfeldstärke und Bremswirkung eingestellt werden. Beide Magnetfelder werden über den dritten Bremsspaltabschnitt 5c geschlossen.

In Fig. 3c ist links ein Querschnitt einer weiteren Ausführungsform eines Bremsspaltabschnitts dargestellt. Dieser Bremsspaltabschnitt weist eine als Sternkontur 40 ausgebildete Scheibenkontur 41 auf. Die Sternkontur 40 weist eine unrunde Umfangsfläche auf. Dadurch entsteht ein Bremsspaltabschnitt mit über dem Umfang variabler Spalthöhe 40c. Dadurch kann auch eine Art Keileffekt entstehen und insbesondere bei geringen Drehzahlen ein hohes Drehmoment eingestellt werden. Die radial nach außen (oder nach innen) abstehenden Elemente können als Magnetfeldkonzentratoren 80 bezeichnet werden, die lokal das Magnetfeld konzentrieren. Eine Sternkontur 40 kann auch als Scheibenpaket 44 ausgebildet sein und mehrere (z. B. sternförmige) Scheibenbleche 46 umfassen.

Eine Sternkontur kann auch in axialer Richtung ausgebildet sein. Das bedeutet, dass in axialer Richtung variable Spalthöhen auftreten. Dadurch kann das Magnetfeld in axialer Richtung an Orten mit geringerer Spalthöhe konzentriert werden, und in den höheren Spalten verringert werden. Auch eine Mischung aus "radialen" und "axialen" oder/und schrägen Sternkonturen ist denkbar.

Insbesondere eignet sich diese Ausgestaltung für den zweiten Bremsspaltabschnitt 5b als Ersatz für einen (zweiten) Bremsspaltabschnitt (5b) mit Wälzkörpern.

In Figur 4a ist die Sensoreinrichtung 70 im Detail dargestellt. Die erste Bremskomponente 2 und die hier als Mantelteil 13 ausgeführte zweite Bremskomponente 3 sind nur angedeutet (gestrichelte Linien). Die Sensoreinrichtung 70 stützt sich über die Entkopplungseinrichtung 78 an der drehbaren zweiten Bremskomponente magnetisch entkoppelt ab. Die Abschirmeinrichtung 75 besteht hier aus drei Abschirmkörpern 76, welche die Streuung des magnetischen Feldes 8 der elektrischen Spule 26 vermindern. Die Abschirmeinrichtung 75 kann auch nur aus topfförmigen Körpern oder einem topfförmigen Körper und einem scheibenförmigen Körper bestehen, die miteinander verbunden sind.

Darüber hinaus ist außerdem noch eine Trenneinheit 77 zur magnetischen Trennung vorhanden. Die Magnetringeinheit 71 wird zum Messen der Orientierung bzw. des Drehwinkels der magnetorheologischen Bremseinrichtung 1 genutzt. Der Magnetfeldsensor 72 ist innerhalb der in diesem Bereich nicht magnetisch ausgebildeten ersten Bremskomponente 2 angeordnet. Kleine relative axiale Verschiebungen, wie sie zum Beispiel durch Betätigen einer Schnappscheibe bewirkt werden, können dazu genutzt werden, um das Betätigen des Bedienknopfs 101 zu detektieren, wie Figur 4b zeigt. Der Drehwinkel und die Orientierung der durch Pfeile eingezeichneten Magnetfeldlinien kann durch den Magnetfeldsensor 72 erfasst werden.

Durch eine axiale Verschiebung verändert sich das empfangene Signal 68 der Sensoreinrichtung 70 gemäß der Darstellung von Figur 4b. Figur 4b zeigt den Verlauf der Amplitude 69 des durch den Magnetfeldsensor 72 detektierten Signals 68 in Abhängigkeit zur axialen Verschiebung der Bremskomponenten 2, 3 relativ zueinander (Push). Durch eine axiale Verschiebung des Magnetfeldsensors 72 gegenüber der Magnetringeinheit 71 verändert sich die Amplitude 69 des detektierten Signals 68. Eine axiale Verschiebung bzw. ein Herunterdrücken (Push) eines Bedienknopfs 101 kann so erfasst werden. Bevorzugt wird dadurch eine Auswahl oder Stellung bestätigt.

Mit dem gleichen Sensor 72 kann auch der Drehwinkel erfasst werden, wobei zur Erfassung des Drehwinkels die Richtung des Magnetfeldes 8 (eingezeichnete Pfeile) ermittelt wird. Die Intensität bestimmt die axiale Position. Aus einer Veränderung des Signals 68 kann deshalb auf eine Betätigung eines Tasters bzw. der Schnappscheibe 29 zurückgeschlossen werden. Das ist vorteilhaft, da ein einziger (mehrdimensionaler) Hallsensor zur Bestimmung der Winkelposition und der Bestimmung einer Axialposition verwendet werden kann.

Figur 5 zeigt stark schematisch die haptische Bedieneinrichtung mit einer Schnappscheibe 29 in zwei unterschiedlichen Positionen, wobei links die unbetätigte und rechts die betätigte Position abgebildet ist. In der linken Darstellung ist die Schnappscheibe nach außen und hier nach unten gewölbt und wird hier durch die Führung 29a in dem Kern geführt (aber nicht gelagert, deshalb nahezu keine Reibung).

Das Volumen des aufgespannten Dreiecks 29b ist in der rechten Hälfte der Abbildung 5 zu erkennen. Das Volumen 29b ergibt sich etwa durch den dreidimensionalen Konus. Wird der haptische Bedienknopf 100 betätigt und die Schnappscheibe 29 von der Ruheposition Position (ausgelenkt) in eine lineare Position innerhalb einer Ebene überführt, so verschiebt sich das Mantelteil 13 gegenüber der ersten Bremskomponente 2 hier axial nach unten. Dadurch taucht ein axialer Abschnitt 22 der Achse bzw. der ersten Bremskomponente 2 in das Innere innerhalb des Mantelteils 13 ein. Die Volumenänderung 29b der Schnappscheibe 29 wird vorzugsweise so bemessen, dass sie im Wesentlichen dem eingetauchten Volumen der ersten Bremskomponente 2 entspricht. Das eintauchende Volumen berechnet sich aus dem axialen Weg 22 multipliziert mit der Querschnittsfläche der ersten Bremskomponente 2 an der Achse 12. Über eine weitgehende Annäherung der Fläche 29b daran kann ein Druckaufbau im Inneren der Kammer 110 minimiert oder verhindert werden. Ein Volumenausgleich kann auch durch eine Membran 31 bereitgestellt werden, wie sie zuvor diskutiert wurde.

Figur 6 zeigt rein schematisch zwei unterschiedlich ausgebildete elektrische Spulen 261, 262, wobei sich die Anzahl der Wicklungen unterscheiden kann. Auch die Größe/Art der Durchmesser und die Form und das Material der Drähte 263, 264 können unterschiedlich sein. Die Größe und äußere Form der elektrischen Spulen 261, 262 kann dabei gleich sein (mit durchgezogener Linie dargestellt) oder auch unterschiedlich sein, so kann die zweite elektrische Spule 262 auch z.B. einen kleineren Querschnitt aufweisen, wie mit gestrichelter Linie eingezeichnet. Dadurch können an den Magnetkreisläufen unterschiedliche Eigenschaften eingestellt werden. Ein Magnetkreislauf kann auf eine schnellere Reaktionsgeschwindigkeit und/oder ein höheres Bremsmoment ausgerichtet sein, während der andere in der Bremseigenschaft besser und/oder Energieeffizienter ausgebildet sein kann. Es können unterschiedlichste Eigenschaftskombinationen erreicht werden. Auch das Material an den Bremsspaltabschnitten kann unterschiedlich sein.

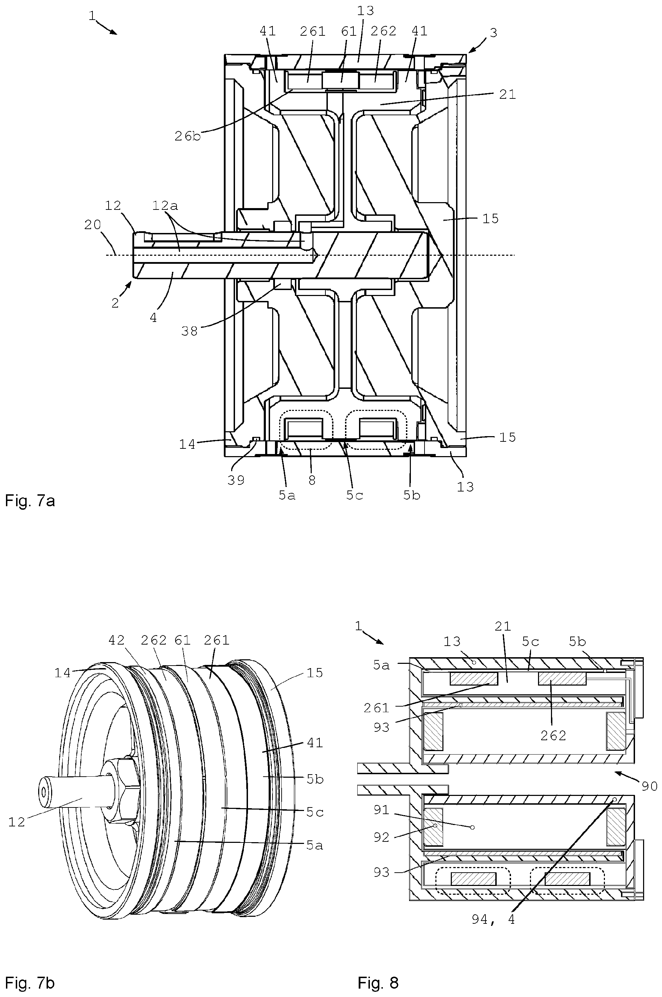

Figur 7a und 7b ist eine weitere haptische Bedieneinrichtung im Schnitt (Figur 7a) und in einer Perspektive (Figur 7b) dargestellt. Die Figur 7a zeigt einen schematischen Querschnitt einer weiteren haptischen Bedieneinrichtung, wobei die erste Bremskomponente 2 an einem als Achse 12 ausgebildeten Halter 4 aufgenommen ist. Auch bei dieser Ausgestaltung sind drei Bremsspaltabschnitte 5a, 5b, 5c vorgesehen, wobei an dem ersten Bremsspaltabschnitt 5a eine Scheibenkontur 41 ausgebildet ist und an dem zweiten Bremsspaltabschnitt 5b eine identische oder auch andere Scheibenkontur 41 ausgebildet ist.

Im Inneren kann ein Reservoir 32 für magnetorheologische Partikel vorhanden sein, um eine ausreichende Versorgung der Bremsspaltabschnitte mit magnetorheologischen Partikeln zu gewährleisten. Insbesondere werden Carbonyleisenpartikel aus der Umgebung angezogen und im Magnetfeldübergangsbereich konzentriert.

In Figur 7a ist am vorderen (linken) Ende ein Deckel 14 und am hinteren Ende ein Deckel 15 angebracht.

Der Scheibenkörper 41 ist hier einstückig mit dem Kern 21 ausgebildet, kann aber auch als Scheibenpaket 44 mit mehreren Scheibenblechen 46 ausgebildet sein.

An der hohl ausgebildeten Achse 12 ist eine Kabeldurchführung 12a ausgebildet, durch welche die Kabel zur Versorgung der beiden elektrischen Spulen 261 und 261 durchgeführt werden. An dem Innenteil ist der (separate) Kern 21 aufgenommen. Auf dem Kern 21 sind die beiden elektrischen Spulen 261 und 262 an Spulenhaltern 26b gewickelt. Zwischen den beiden elektrischen Spulen 261 und 262 ist die Ringkontur 61 für den dritten Bremsspaltabschnitt 5c aufgenommen oder ausgebildet. In einfachen Ausgestaltungen ist die Ringkontur 61 als separates Teil auf den Kern 21 aufgebracht und stellt einen dünnen Spalt zwischen der Außenseite der Ringkontur 61 und dem Innenumfang des Mantelteils 13 zur Verfügung, wie oben in Fig. 7a dargestellt. Die Ringkontur 61 kann auch einstückig mit dem Kern ausgebildet sein, vgl. Fig. 7a unten. Der dritte Bremsspaltabschnitt 5c dient zum Schließen der beiden Magnetfelder der beiden elektrischen Spulen 261 und 262.

Das Magnetfeld der ersten elektrischen Spule 261 verläuft im Wesentlichen radial durch den ersten Bremsspaltabschnitt 5a und den dritten Bremsspaltabschnitt 5c und axial durch den Kern 21 sowie das Mantelteil 13. Das Magnetfeld der zweiten elektrischen Spule 262 verläuft im Wesentlichen radial durch den zweiten Bremsspaltabschnitt 5b und den dritten Bremsspaltabschnitt 5c und axial durch den Kern 21 sowie das Mantelteil 13. Die beiden elektrischen Spulen 261, 262 sind so gewickelt und werden so bestromt, dass die Magnetfelder der beiden elektrischen Spulen 261, 262 im Bereich des dritten Bremsspaltabschnitts 5c in die gleiche Richtung verlaufen, wie auch schematisch in Fig. 3b dargestellt.

Figur 8 zeigt einen schematischen Querschnitt einer weiteren Ausführungsform, wobei im Inneren ein Antriebsmotor 90 untergebracht ist, der radial innerhalb der elektrischen Spulen 261 und 262 und radial innerhalb der Bremsspaltabschnitte 5a, 5b und 5c angeordnet und aufgenommen ist. Der Antriebsmotor 90 steht in axialer Richtung hier nicht über die Bremseinrichtung 1 über. Der Antriebsmotor 90 ist an dem Halter 4 bzw. dem stehenden Trägerelement 94 befestigt. Der Antriebsmotor 90 kann bei großen Durchmessern (z.B. Figur 7a und 7b) und dem sich dann ergebenden (und nicht für die Erzeugung vom Bremsmoment benötigten Bauraum) im Zentrum für einen Antriebsmotor wie ein Elektromotor genutzt werden. Hier wird vorzugsweise ein (und insbesondere ein bürstenloser DC-Motor (BLDC) eingesetzt. Die Permanentmagnete 93 werden hier an dem Elektromotor eingesetzt. Es gibt aber auch Ausführungen ohne Permanentmagnete, z. B. bei einem elektrisch erregten Elektromotor.

Die magnetorheologische Bremseinrichtung 1 Bremse wird quasi radial um den Antriebsmotor 90 herum gebaut. Dies spart Bauraum und insbesondere Baulänge.

Das Trägerelement 94 ist hier feststehend und mit dem Halter 4 fest verbunden, sodass sowohl beim Bremsen als auch beim aktiven Antreiben ein Moment erzeugt werden kann (Actio = Reactio). Dabei sind die zuvor genannten Komponenten des Antriebsmotors 90 hier radial und auch axial innerhalb des von den Bremsspaltabschnitten 5a, 5b, 5c definierten Außenumfangs angeordnet. Die MRF-Bremse wird sozusagen radial um den Antriebsmotor 90 herum gebaut, wodurch Bauraum erheblich eingespart werden kann. Das ist besonders bei haptischen Bedieneinrichtungen und auch bei Lenkeinrichtungen für autonom fahrende Fahrzeuge von Vorteil. Denn dort wird oft gewünscht, dass das Lenkrad um 300 mm von einer Person auf dem Fahrersitz nach vorne verfahren werden kann, damit die Person z. B. mit einem Notebook arbeiten kann, während das Fahrtzeug autonom fährt. Für einen solchen großen Verfahrweg steht in einem Cockpit oft nicht genügend Bauraum zur Verfügung. Mit der hier gezeigten Erfindung wird dieser Bauraum geschaffen.

Insgesamt wird eine sehr kostengünstig herstellbarer haptische Bedieneinrichtung zur Verfügung gestellt, wobei gegebenenfalls durch eine "Lagerung" über die Scheibenkontur 41 wenigstens ein Lager eingespart werden kann, wodurch auch die Bauhöhe reduziert wird. Es wird eine sehr geringere Grundreibung erreicht. Dadurch, dass weniger Teile verwendet werden, wird die Herstellung einfacher und kostengünstiger. Durch eine geringere Teileanzahl werden auch die Toleranzanforderungen verbessert, da Toleranzenketten vermieden werden. Ein haptischer Bedienknopf z. B. als Drehknopf oder Drehelement mit einer haptischen Bedieneinrichtung ist in unterschiedlichsten Bereichen anwendbar. Mit den beiden elektrischen Spulen 261, 262 kann jeweils separat ein Bremsmoment eingestellt werden.

Gegebenenfalls kann eine Betätigung über ein Schnappteil oder eine Schnappscheibe oder einen Taster oder dergleichen erfasst werden. Eine Beleuchtung des Drehknopfs kann beispielsweise über LEDs oder dergleichen erfolgen. Der Körper des Drehknopfs kann dann entsprechend teilweise oder ganz milchig ausgebildet sein, um eine entsprechende Streuwirkung zu erzielen.

Figur 6 zeigt schematisch eine Schaltung zur schnellen Ansteuerung der elektrischen Spule 26. Die elektrische Spule 26 (Magnetspule) wird hier durch eine H-Schaltung angesteuert. Diese ist in der Figur 9 nur durch Schalter angedeutet. Eine im Normalbetrieb bzw. im Dauerbetrieb eingesetzte Spannungsquelle 35a mit geringerer Spannung von z. B. 12V liefert die Spannung für den normalen Betrieb. Für die Spannungsspitzen wird über einen Schalter eine Spannungsquelle 35b mit höherer Spannung von z.B. 18V oder 24V dazu geschaltet. Dann wird die Spannungsquelle 35a mit niedrigerer Spannung zeitweise getrennt. Nach dem Erreichen des maximalen Stroms wird die Spannungsquelle 35b mit höherer Spannung wieder von der Schaltung und der elektrischen Spule 26 getrennt und es wird wieder die Spannungsquelle 35a mit niedriger Spannung angeschlossen. Die Schalter können dabei beliebige elektrische Bauteile sein, die insbesondere in der Lage sind, im Millisekunden-Bereich zu koppeln und entkoppeln.

Dadurch erreicht der Strom in der elektrischen Spule 26 schneller den gewünschten Wert. In einem konkreten Fall wird die gewünschte Stromstärke innerhalb von 10ms anstatt von 40ms erreicht. Der Wechsel zwischen den Spannungen kann über eine elektrische Schaltung erfolgen.

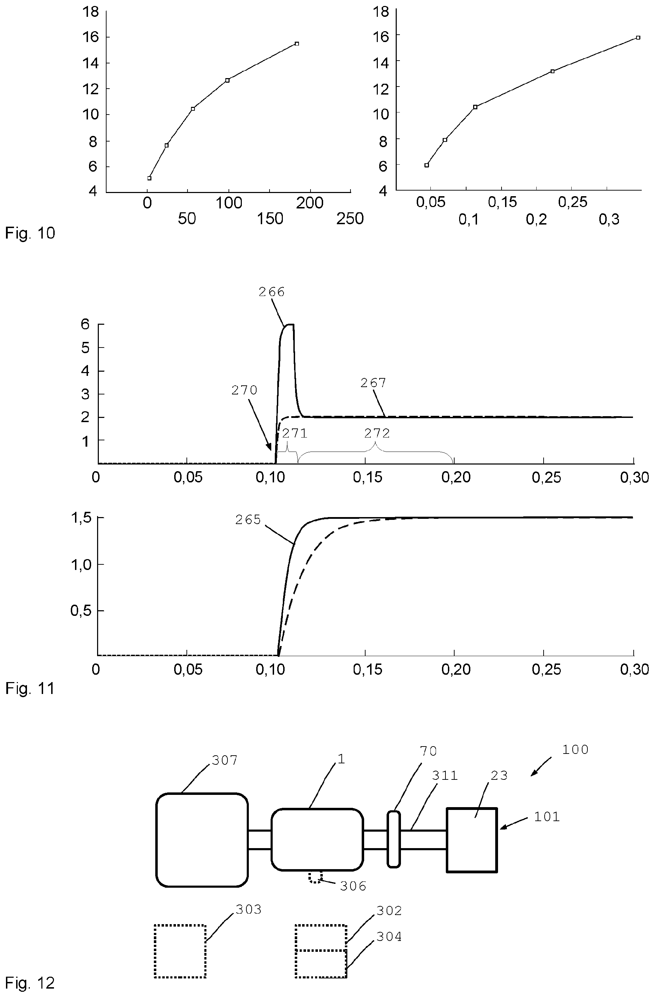

Figur 10 zeigt in schematischer Darstellung zwei erzeugte Bremsmomentverläufe, wobei das erzeugte Bremsmoment (normiert und deshalb hier dimensionslos - Y-Achse) über der elektrisch eingebrachten Leistung (normiert und deshalb hier dimensionslos - X-Achse) aufgetragen ist. Links ist der Verlauf für einen BLDC-Motor ("brushless direct current-Motor") und rechts der Verlauf für eine magnetorheologische Bremseinrichtung abgebildet. Es ist erkennbar, dass für das gleiche Bremsmoment der elektrische Motor erheblich mehr Leistung benötigt als die magnetorheologische Bremseinrichtung. Für ein Bremsmoment von "14" benötigt der elektrische Motor mehr als "130" normierte Leistung, während die magnetorheologische Bremseinrichtung eine (deutlich) geringere Leistung von weniger als "0,3" benötigt. Das Verhältnis der Leistungsaufnahmen ist größer als 100:1 und liegt hier bei etwa 500:1.

Magnetorheologische Kupplungseinrichtungen und Bremsen haben u.a. den Vorteil, dass sie zum Kuppeln bzw. zur Dämpfung von Bewegungen nur wenig Strom benötigen, leise sind, wenig Wärme erzeugen und sehr schnell reagieren (~ms) etc. Der geringe Strombedarf ist besonders vorteilhaft bei batteriebetriebenen Komponenten wie z. B. Elektrofahrzeugen, bei denen sich der Stromverbrauch aller Komponenten automatisch stark in der Reichweite der Fahrzeuge niederschlägt. Aber auch bei Fahrzeugen mit Verbrennungsmotor oder elektrischen Geräten im Allgemeinen ist der Stromverbrauch ein Thema.

Figur 11 zeigt die sich ergebenden Bremsmomentverläufe einer magnetorheologischen Bremseinrichtung 1 für zwei unterschiedliche Stromstärkenverläufe (Y-Achse) über der Zeit (X-Achse). Dabei stellt die gestrichelte Kurve in der oberen Hälfte der Abbildung den konventionellen Verlauf dar, bei dem die Stromstärke direkt auf die angestrebte Stromstärke erhöht wird. Als Leistungsparameter kann auch die Spannung der elektrischen Spule 261 dienen. Zu Beginn soll zum Vorzeitpunkt 270 das Bremsmoment sprungartig erhöht werden. Dazu wird beim Vorzeitpunkt 270 der Leistungsparameter 271 erheblich erhöht. Und zwar stärker erhöht als zur dauerhaften Erreichung des dann einzustellenden Bremsmomentes nötig ist. Der Leistungsparameter 271 ist wenigstens 10% oder 20% höher als der zweite Leistungsparameter 272. Hier sogar noch weitaus stärker. Es ist klar erkennbar, dass der Bremsmomentverlauf 265 durch die Überhöhung erheblich schneller den angestebten Wert erreicht. Dadurch kann eine bessere Annäherung an einen kastenförmigen Verlauf erreicht werden.

Hier wird z.B. zum Zeitpunkt 0,1 Sekunden die Stromstärke von 0 Ampere auf 2 Ampere erhöht. Der resultierende Verlauf des Bremsmomentes bzw. der Kopplungsintensität ist in der unteren Hälfte von Figur 11 gestrichelt dargestellt. Das übertragbare Bremsmoment erhöht sich bei der gestrichelten Kurve von dem Startzeitpunkt bei 0,1 Sekunden innerhalb von etwa 25 Millisekunden (Zeitpunkt 0,125 Sekunden) auf einen abgelesenen Wert von etwa 1,25 (normiert auf z.B. eine mittleeren Wert oder eine Normeinheit) und erreicht nach etwa 75 Millisekunden (Zeitpunkt 0,175 Sekunden) asymptotisch (nahezu) den eingestellten Grenzwert von etwa 1,5.

Wird hingegen zu Beginn des Kupplungs- bzw. dem Start des Brems- oder Dämpfungsvorgangs die Stromstärke dreifach auf z. B. hier 6 Ampere erhöht, wie es die durchgezogenen Linien zeigen, erhöht sich das Bremsmoment erheblich stärker und erreicht schon nach etwa 10 Millisekunden den Endwert von 1,5. Dabei wird der "Stromboost" mit erhöhter Stromstärke hier nur für etwa 10 ms aktiviert. Danach wird, wie die obere durchgezogene Kurve zeigt, die Stromstärke auf 2 Ampere reduziert. Über die kurzzeitige Erhöhung der Stromstärke ("Stromboost") kann eine deutliche schnellere Einstellung (zur Verfügung Stellung) des Kupplungs-, Dämpf- oder Bremsmomentes erfolgen. Das ist in mehrerlei Hinsicht sehr vorteilhaft, da ein schnelles Stehenbleiben und ein direkteres haptisches Gefühl (Feedback) erfahrbar ist. In der Realität merkt man den Unterschied zwischen den zwei Kurven sehr stark.

Figur 9 zeigt schematisch eine Schaltung zur schnellen Ansteuerung der elektrischen Spule 26. Die elektrische Spule 26 (Magnetspule) kann hier z. B. durch eine H-Schaltung angesteuert werden. Diese ist hier nur durch Schalter angedeutet. Eine im Normalbetrieb bzw. im Dauerbetrieb eingesetzte Spannungsquelle 35a mit geringerer Spannung von z. B. 12V (oder auch 3V oder 6V; je nach Anwendungsfall eine geeignete Spannung) liefert die Spannung für den normalen Betrieb. Für die Spannungsspitzen wird über einen Schalter eine Spannungsquelle 35b mit höherer Spannung von z.B. 18V oder 24V (oder z. B. 6V oder 12V) dazu geschaltet. Dann wird die Spannungsquelle 35a mit niedrigerer Spannung zeitweise getrennt. Nach dem Erreichen des maximalen Stroms wird die Spannungsquelle 35b mit höherer Spannung wieder von der Schaltung und der elektrischen Spule 26 getrennt und es wird wieder die Spannungsquelle 35a mit niedriger Spannung angeschlossen. Die Schalter können dabei beliebige elektrische Bauteile sein, die insbesondere in der Lage sind, im Millisekunden-Bereich zu koppeln und entkoppeln.

Dadurch erreicht der Strom in der elektrischen Spule 26 schneller den gewünschten Wert. In einem konkreten Fall wird die gewünschte Stromstärke innerhalb von 10ms anstatt von 40ms erreicht. Der Wechsel zwischen den Spannungen kann über eine elektrische Schaltung erfolgen.

Eine Kombination aus Spannung und Strom ist auch möglich. Spannungen von über 24 Volt und weit darüber (z.B. > hundert Volt) sind auch möglich.

Statt einer elektrischen Spule können auch zwei oder mehr Elektrospulen verwendet werden, welche verschieden ausgeführt (Drahtstärke, Anzahl Windungen, Material...) und unterschiedlich bestromt werden, um den Boosteffekt zu erhalten.

Figur 12 zeigt eine anmeldungsgemäße haptische Bedieneinrichtung 100 zum Bedienen von verschiedensten Geräten, Einrichtungen und Vorrichtungen, wie sie in dieser Anmeldung und Beschreibung (Einleitung, allgemeine Beschreibung, Beschreibung der Ausführungsbeispiele und Ansprüche) erwähnt werden. Zum Drehen wird z. B. ein Drehknopf 23 (auch in Form einer Bedienwalze) verwendet. Auch der Einsatz einer Lenkeinheit oder eines Lenkrades ist zum Bedienen möglich. Der Drehknopf 23 oder der Bedienknopf 101 kann insbesondere mit der Welle 311 drehfest verbunden sein.

Die haptische Bedieneinrichtung 100 kann auch als eine Steer-by-Wire-Lenkung ausgebildet sein.

In diesem Ausführungsbeispiel und in allen anderen Ausführungsbeispielen, Ausgestaltungen und Weiterbildungen kann eine Aktuatoreinrichtung 303 umfasst sein, um die Drehbewegung in eine andere Bewegung umzusetzen. Die Aktuatoreinrichtung 303 kann insbesondere auch nur elektrisch mit dem Bedienknopf 101 verbunden sein.

Die Drehbewegung des Bedienknopfs 101 wird mittels einer Sensoreinrichtung 70 und beispielsweise einem Drehwinkelsensor erfasst. In Abhängigkeit des Drehwinkels steuert die Aktuatoreinrichtung 303 dann andere Komponenten oder Aktuatoren.

An der Welle 311 ist hier eine als Elektromotor ausgebildete Antriebseinrichtung 307 angebunden. Durch die Antriebseinrichtung 307 kann der Bedienknopf 101 aktiv gedreht werden. Dadurch wird der Bedienknopf 101 in bestimmten Fällen (aktiv) gedreht, beispielsweise - aber nicht nur - bei einer (Simulation einer) Lenkung, um dem Bediener ein entsprechendes haptisches Feedback zu geben.

Die Bewegung des Bedienknopfes oder drehbaren Bedienelementes 101 kann mittels einer magnetorheologischen Bremseinrichtung 1 gezielt und gesteuert gebremst werden. Zur Ansteuerung der Bremseinrichtung 1 und auch der Antriebseinrichtung 307 in Abhängigkeit verschiedener Parameter und z. B. des Winkels kann hier ein Steuergerät 302 vorgesehen sein. Dazu ist das Steuergerät 302 mit der Sensoreinrichtung 70 wirkverbunden.

Das Steuergerät 302 berücksichtigt beispielsweise auch Daten eines Assistenzsystems 304. Dadurch kann die Bewegung des drehbaren Bedienelementes 101 je nach Fahrsituation gezielt beeinflusst werden. Das Steuergerät 102 kann auch mit weiteren hier nicht näher dargestellten Sensoren wirkverbunden sein, um das Verhalten in Abhängigkeit weiterer Parameter gezielt beeinflussen zu können.

Die Bremseinrichtung 1 ist hier mit einer Sicherheitseinrichtung 306 ausgestattet, welche ein hier nicht sichtbares magnetorheologisches Medium 6 aus einem hier ebenfalls nicht sichtbaren Spalt 5 entfernt. So kann beispielsweise bei einer Störung das Bremsmoment sehr zügig und zuverlässig aufgehoben werden. Der Spalt 5 und das Medium 6 können so ausgewählt werden, wie es im Rahmen dieser Anmeldung beschrieben und in den weiteren Figuren gezeigt ist.

Die in Figur 12 dargestellte erfindungsgemäße Bedien- oder Betätigungseinrichtung 100 kann zum Drehen eines hier nicht näher dargestellten Bedien- oder Betätigungsmittels einer Bedien- oder Betätigungseinheit dienen. Die Bedien- oder Betätigungseinheit 101 ist hier als ein drehbarer Knopf ausgebildet, welches mit einer Welle 311 drehfest verbunden ist.

Die Bedien- oder Betätigungseinrichtung 100 kann hier auch als eine Steer-by-Wire-Lenkung eines Spiels (Gaming; Force-Feedback-Lenkrad) ausgebildet sein, ohne darauf beschränkt zu sein. Dazu dient eine Aktuatoreinrichtung 303 zur Umsetzung der mit der Bedien- oder Betätigungseinheit 101 ausgeführten Lenkbewegung in eine (virtuelle) Fahrzeugbewegung in einem (Renn)spiel (z.B. Need for Speed; Project Cars; Moto GP; Flugsimulator...). Beispielsweise lenkt die Aktuatoreinrichtung 303 die (virtuellen) Fahrzeugräder oder das Fahrzeugrad bei einem Motorrad. Die Aktuatoreinrichtung 303 ist dann nur elektrisch mit der Lenkeinheit 101 verbunden.

Die Drehbewegung einer Lenkeinheit wird mittels einer Sensoreinrichtung 70 und beispielsweise einem Drehwinkelsensor erfasst. In Abhängigkeit des Drehwinkels lenkt die Aktuatoreinrichtung 303 dann z. B. die Fahrzeugräder im Videospiel.

An der Welle (bzw. Lenkungswelle) 311 ist hier eine als Elektromotor ausgebildete Antriebseinrichtung 307 angebunden. Durch die Antriebseinrichtung 307 kann die Lenkeinheit 301 aktiv gedreht werden. Dadurch wird die Lenkeinheit 301 beispielsweise beim Kurvenfahren oder Rückstellen aktiv bewegt, wie es auch bei einer konventionellen mechanischen Lenkung in einem realen Fahrzeug der Fall wäre.

Die Bewegung der Bedien- oder Betätigungseinheit 101 kann mittels einer magnetorheologischen Bremseinrichtung 1 gezielt gebremst werden. Zur Ansteuerung der Bremseinrichtung 1 und auch der Antriebseinrichtung 307 in Abhängigkeit verschiedener Parameter und z. B. des Lenkwinkels ist hier ein (Lenkungs-) Steuergerät 302 vorgesehen. Dazu ist das (Lenkungs) Steuergerät 302 mit der Sensoreinrichtung 70 wirkverbunden.

Das (Lenkungs-) Steuergerät 302 berücksichtigt beispielsweise auch Daten eines (Fahr-) Assistenzsystems 304 oder Daten von anderen Spieler oder Spielsituationen (Sim Racer; Rennsimulatoren...). Dadurch kann die Bewegung der Lenkeinheit 301 je nach Fahrsituationen gezielt beeinflusst werden. Das (Lenkungs-) Steuergerät 102 kann auch mit weiteren hier nicht näher dargestellten Sensoren oder Informationsquellen eines Spieles wirkverbunden sein, um das Lenkverhalten in Abhängigkeit weiterer Parameter gezielt beeinflussen zu können.

Der Bedienknopf kann auch an oder in einer Industrieanlage, in der Computerperipherie, bei Automobilen, Flugzeugen usw. eingesetzt werden und kann um die zuvor beschriebene aktive Komponente ergänzt werden.

Die Erfindung stellt eine haptische Bedieneinrichtung zur Verfügung, die kompakt, robust und sehr günstig ist. Die haptische Bedieneinrichtung eignet sich besonders gut zur Verwendung in der Automobilindustrie, ist aber auch in allen möglichen Geräten und Maschinen einsetzbar.

Ein großer Vorteil der Konstruktion ist, dass außen keine Kabel, kein Sensor und keine Elektronik nötig sind. Somit ist bei allen Ausgestaltungen eine hohe IP Klasse möglich. Im Prinzip liegt alles hinter einer Montageblende.

Die elektrischen Spulen sind vorzugsweise komplett von dem Raum mit dem magnetorheologischen Medium abgetrennt, insbesondere über eine Vergussmasse.

In bevorzugten Ausgestaltungen ist eine axiale Verschiebung möglich, wobei insbesondere ein Flüssigkeitsvolumen im inneren verschoben wird. Zwischen einem Deckel und einer Scheibenkontur ist vorzugsweise genügend Raum vorgesehen, damit das dazwischenliegende Medium (oder Flüssigkeit) oder Carbonyl nicht verdichtet wird. (Das könnte sonst zu hohen axialen Verstellkräften führen.) Dadurch wird ein zusätzlich MRF-Reservoir bereitgestellt, aus dem Partikel in den Bereich der Scheibenkontur bzw. der Sternkontur nachfließen können. Magnetische Partikel fließen nämlich immer in Richtung des stärkeren Felds, da magnetische Partikel von dem Magnetfeldgradienten angezogen werden.

Die Dichtung läuft vorzugsweise auf der Achse. Es gibt eine Rotationsbewegung (mehr als 100.000 Umdrehungen sind möglich) und es kann eine Linearbewegung für den Taster geben. Damit die Dichtung nicht einläuft und eine Laufrille bildet und damit die Reibung gering ist und die Leckage (Schleppöl) über die Lebensdauer nicht zu hoch wird, ist eine entsprechende Werkstoffpaarung mit einer harten Lauffläche bevorzugt.

Vorzugsweise wird der erste Bremsspaltabschnitt 5a mit einer Scheibenkontur ausgerüstet. Der zweite Bremsspaltabschnitt 5b wird insbesondere mit einer identischen (zylindrischen) Scheibenkontur oder mit einer sternförmigen Scheibenkontur ausgerüstet. Eine Scheibenkontur ermöglicht eine gute Magnetfeldweiterleitung und ein hohes Moment bei hohen Drehzahlen.

Die kombinierte Lösung, auch Hybridlösung genannt, kombiniert beide Vorteile. Ein axialer Übergang des Magnetfeldes hatte im Stand der Technik hingegen eine kleinere Übergangsfläche und ergab so geringere Bremsmomente. Außerdem hat ein axialer Magnetfeldübergang einen geringeren Abstand (Radius) und erzeugt schon daher weniger Moment. Ein ebenfalls radialer Bremsspaltabschnitt 5a mit einer Scheibenkontur hat demgegenüber einen größeren Durchmesser und erzeugt damit bei gleicher Kraft ein größeres Moment. Außerdem ist die Fläche größer, da der größere Umfang eine größere Fläche aufspannt. Wenn die Breite der Konturscheibe größer ist, als 1/6 des Durchmessers, ist das übertragbare Bremsmoment am (umfänglichen) radialen Bremsspaltabschnitt schon größer als das maximal übertragbare Bremsmoment auf der axialen Fläche! Schließlich sind durch die geringere Spalthöhe an der Scheibenkontur die magnetischen Verluste kleiner. Alles das bewirkt ein höheres Bremsmoment auch bei höheren Drehzahlen.

Ein Volumenausgleich für die Push-Funktion kann durch eine Membran am Ende des Mantelteils bereitgestellt werden. Hinter der Membran ist ein Klickelement wie eine Schnappscheibe ("Snap Dome"). Dieses gibt einen haptisch fühlbaren Druckpunkt. Zusätzlich hört man das Klicken beim Erreichen des Druckpunktes und die Schnappscheibe drückt den gesamten Knopf bzw. das Mantelteil wieder in die Ausgangsstellung zurück (ähnlich einer Maustaste bei Computermaus).

Die Membran dichtet dann den MRF-Raum ab. Das Volumen hinter der Membran wirkt als Volumenausgleich beim Drücken. In der Normalstellung weist die Schnappscheibe eine Wölbung auf. Wird der Knopf in axialer Richtung verschoben, drückt der Stator der Bremseinrichtung gegen die Membran und die Schnappscheibe. Diese wird dadurch flach gedrückt.

Das Design der haptischen Bedieneinrichtung kann noch aufgewertet werden, indem man die Abdeckung um verschiedenen Lichteffekte ergänzt. Eine kostengünstige Variante ist die Verwendung einer Kappe/Abdeckung mit einem transparenten Element, welches von unten mit LEDs beleuchtet wird. Dazu kann entweder eine transparente Hülse an dem Mantelteil angebracht oder in die Abdeckung eingearbeitet werden, oder die gesamte Innenseite der Abdeckung wird als solches ausgeführt (ein umgekehrter Topf). Dazu kann das transparente Teil an den Kanten schräg geschliffen sein, um das Licht in gewünschte Richtung abzulenken.

Als transparentes Material kann normales Glas verwendet werden, oder PMMA (Acrylglas). Der Vorteil von PMMA ist, dass man milchiges Glas verwenden kann, welches das Licht innerhalb bricht und so die Gesamte Oberfläche gleichmäßig ausleuchten kann. Zur Beleuchtung können eine oder mehrere LEDs verwendet werden, auch mit verschiedenen Farben.

In allen Ausgestaltungen kann auch die äußere Bremskomponente drehfest ausgeführt sein und die innere Bremskomponente die drehbare Komponente sein. In dem Fall muss die elektrische Kontaktierung der elektrischen Spule über Leitungen durch die äußere Bremskomponente erfolgen oder z. B. über Schleifkontakte.

Wird eine Wickelfeder als elektrische Kontaktierung verwendet, so stellt vorzugsweise ein Absolutsensor den Drehwinkel (z.B. Absolutdrehwinkelgeber) fest und die Steuerung lässt ein Überdrehen nicht zu. So kann ein Blockieren bei einem bestimmten Winkel oder ein warnendes haptisches Feedback erfolgen, damit die Wickelfeder nicht abgerissen wird bzw. werden kann.

**Bezugszeichenliste:**

| | | | |
|---|---|---|---|
| 1 | Magnetorheologische Bremseinrichtung | 32 | Reservoir |
| | | 35a | Spannungsversorgung 12V |
| 2, 3 | Bremskomponente | 35b | Spannungsversorgung 18V |
| 4 | Halter | 38 | Dichtung |
| 5 | Spalt, Bremsspalt | 39 | O-Ring |
| 5a | Bremsspaltabschnitt für 41 | 40 | Sternkontur |
| 5b | Bremsspaltabschnitt für 11 | 40c | Spalthöhe |
| 5c | Bremsspaltabschnitt für 61 | 41 | Scheibenkontur |
| 5d | Bremsspaltabschnitt | 41a | integraler Ringflansch |
| 6 | Medium | 41b | Spalthöhe von 5a |
| 8 | Magnetfeld, Feld | 41e | axiale Breite von 5a |
| 11 | Wälzkörper | 42 | Ringkörper, Scheibenkörper |
| 11b | Spalthöhe von 5b | 42a | Aufnahme |
| 11c | radialer Freiraum bei 5b | 43 | Benutzerschnittstelle |
| 11d | Durchmesser von 5b | 44 | Scheibenpaket |
| 11e | axiale Breite von 5b | 45 | Kabel |
| 12 | Achse | 46 | Scheibenblech |
| 12a | Kabeldurchführung | 47 | ausgebauchte Außenkontur |
| 13 | Mantelteil | 48 | Befüllschraube |
| 14 | Abschluss, Deckel | 49 | Überzug |
| 15 | Abschluss, Deckel | 50 | Konsole |
| 16 | Stift | 51 | Mutter |
| 18 | Leuchtmittel | 61 | Ringkontur |
| 19 | magnetische Partikel | 68 | Signal |
| 20 | Rotationsachse, axiale Richtung | 69 | Amplitude |
| | | 70 | Sensoreinrichtung |
| 21 | Kern | 71 | Magnetringeinheit |
| 22 | Hub | 72 | Magnetfeldsensor |
| 23 | Drehknopf | 75 | Abschirmeinrichtung |
| 26 | Spule | 76 | Abschirmkörper |
| 26b | Spulenhalter | 77 | Trenneinheit |
| 26e | axiale Breite | 78 | Entkopplungseinrichtung |
| 28 | Vergussmasse | 79 | Sensorplatine |
| 29 | Schnappscheibe | 79a | Kontaktpin |
| 29a | Führung | 80 | Magnetfeldkonzentrator |
| 29b | Volumen | 100 | Haptische Bedieneinrichtung |
| 31 | Membrane | | |
| 90 | Antriebsmotor | 266 | erster Leistungsparameter |
| 91 | Kern von 90 | 267 | zweiter Leistungsparameter |
| 92 | Wicklung von 90 | 270 | Vorzeitpunkt |
| 93 | Permanentmagnet von 90 | 271 | erster Zeitraum |
| 94 | Trägerelement (stehend) | 272 | zweiter Zeitraum |
| 101 | Bedienkopf | 302 | Steuergerät |
| 102 | Bedienwalze | 303 | Aktuatoreinrichtung |
| 110 | geschlossene Kammer | 304 | Assistenzsystem |
| 200 | Gerätekomponente | 305 | Remanenzeinrichtung |
| 261 | elektrische Spule | 306 | Sicherheitseinrichtung |
| 262 | elektrische Spule | 307 | Antriebseinrichtung |
| 263 | Draht | 311 | Welle |
| 264 | Draht | | |
| 265 | Bremsintensität | | |

## Patentansprüche

1. Haptische Bedieneinrichtung (100) mit einer magnetorheologischen Bremseinrichtung (1) mit einem feststehenden Halter (4) und mit wenigstens zwei Bremskomponenten (2, 3), wobei eine der beiden Bremskomponenten (2, 3) mit dem Halter (4) drehfest verbunden ist und wobei die beiden Bremskomponenten (2, 3) relativ zueinander kontinuierlich um eine Rotationsachse (20) drehbar sind, wobei sich eine erste Bremskomponente (2) entlang der Rotationsachse (20) erstreckt und einen Kern (21) aus einem magnetisch leitfähigen Material umfasst und wobei die zweite Bremskomponente (3) ein sich um die erste Bremskomponente (2) herum erstreckendes hohl ausgebildetes Mantelteil (13) umfasst, wobei zwischen der ersten und der zweiten Bremskomponente (2, 3) axial voneinander beabstandete und umlaufende und wenigstens zum Teil mit einem magnetorheologischen Medium (6) gefüllte Bremsspaltabschnitte (5a, 5b, 5c) ausgebildet sind,
**dadurch gekennzeichnet,**
**dass** axial zwischen einem ersten Bremsspaltabschnitt (5a) und einem zweiten Bremsspaltabschnitt (5b) wenigstens ein dritter Bremsspaltabschnitt (5c) angeordnet ist, und dass dem ersten Bremsspaltabschnitt (5a) eine erste elektrische Spule (261) und dem zweiten Bremsspaltabschnitt (5b) eine separat steuerbare zweite elektrische Spule (262) zugeordnet ist.

2. Haptische Bedieneinrichtung (100) nach Anspruch 1, wobei der erste Bremsspaltabschnitt (5a) und der zweite Bremsspaltabschnitt (5b) unterschiedlich ausgebildet sind.

3. Haptische Bedieneinrichtung (100) nach einem der vorhergehenden Ansprüche, wobei an dem ersten Bremsspaltabschnitt (5a) und dem zweiten Bremsspaltabschnitt (5b) wenigstens teilweise unterschiedliche Materialien eingesetzt sind.

4. Haptische Bedieneinrichtung (100) nach einem der vorhergehenden Ansprüche, wobei an wenigstens einem Bremsspaltabschnitt (5a) eine Scheibenkontur (41) zwischen dem Mantelteil (13) und dem Kern (21) angeordnet ist.

5. Haptische Bedieneinrichtung (100) nach einem der vorhergehenden Ansprüche, wobei an wenigstens zwei Bremsspaltabschnitten (5a-5c) gleiche Scheibenkonturen (41) ausgebildet sind.

6. Haptische Bedieneinrichtung (100) nach einem der vorhergehenden Ansprüche, wobei an wenigstens einem Bremsspaltabschnitt (5b) eine Mehrzahl von Wälzkörpern (11) auf dem Umfang des Kerns (21) angeordnet ist und wobei die Wälzkörper (11) an einer Halterung (11f) aufgenommen sind.

7. Haptische Bedieneinrichtung (100) nach einem der vorhergehenden Ansprüche, wobei an wenigstens einem Bremsspaltabschnitt (5a) zwischen dem Mantelteil (13) und dem Kern (21) wenigstens eine Sternkontur (40) angeordnet ist, sodass sich in dem Bereich der Sternkontur (40) eine veränderliche Spalthöhe (40c) über den Umfang des Bremsspaltabschnitts (5b) ergibt und wobei an der Sternkontur (40) Magnetfeldkonzentratoren (80, 81) angeordnet sind, welche radial in den Bremsspaltabschnitt (5a) hineinragen.

8. Haptische Bedieneinrichtung (100) nach Anspruch 7, wobei wenigstens an einem Bremsspaltabschnitt wenigstens eine als Sternkontur (40) ausgebildete Scheibenkontur (41) ausgebildet ist.

9. Haptische Bedieneinrichtung (100) nach einem der vorhergehenden Ansprüche, wobei die erste elektrische Spule (261) und die zweite elektrische Spule (262) jeweils zwischen dem Mantelteil (13) und dem Kern (21) aufgenommen und jeweils um die Rotationsachse (20) herum gewickelt sind und/oder wobei die erste elektrische Spule (261) und die zweite elektrische Spule (262) unterschiedlich ausgebildet sind.

10. Haptische Bedieneinrichtung (100) nach einem der vorhergehenden Ansprüche, wobei die Scheibenkontur (41) als separater Scheibenkörper (42) oder einstückig mit dem Kern (21) ausgebildet ist.

11. Haptische Bedieneinrichtung (100) nach einem der vorhergehenden Ansprüche, wobei die Magnetfelder (8) der ersten elektrischen Spule (261) und der zweiten elektrischen Spule (262) jeweils im Wesentlichen axial durch den Kern (21) und das Mantelteil (13) und im Wesentlichen radial durch den dritten Bremsspaltabschnitt (5c) durchtreten.

12. Haptische Bedieneinrichtung (100) nach einem der vorhergehenden Ansprüche, wobei der erste, zweite und dritte Bremsspaltabschnitt an einem gemeinsamen Spalt (5) ausgebildet sind.

13. Haptische Bedieneinrichtung (100) nach einem der vorhergehenden Ansprüche, wobei zwischen den Bremskomponenten (2, 3) eine geschlossene Kammer (110) ausgebildet ist, und wobei die geschlossene Kammer (110) wenigstens zu einem erheblichen Anteil mit einem magnetorheologischen Medium (6) wie einem magnetorheologischen Fluid und/oder Carbonyleisenpulver gefüllt ist.

14. Haptische Bedieneinrichtung (100) nach einem der vorhergehenden Ansprüche, umfassend wenigstens zwei magnetorheologische Bremseinrichtungen (1) und/oder umfassend wenigstens eine Antriebseinrichtung zur aktiven Drehung einer der Bremskomponenten (2, 3).

15. Vorrichtung ausgebildet als Bedienknopf (101) oder Gerätekomponente (200) mit einer haptischen Bedieneinrichtung (100) nach einem der vorhergehenden Ansprüche, umfassend wenigstens eine Benutzerschnittstelle (43), ein Bedienpanel, ein Display, ein berührungsempfindliches Display mit oder ohne haptischem Feedback und/oder wenigstens einen Sensor.

## Claims

1. A haptic operating device (100) comprising a magnetorheological braking device (1) with a stationary holder (4) and at least two braking components (2, 3), wherein one of the two braking components (2, 3) is connected to the holder (4) in a rotationally fixed manner, and wherein the two braking components (2, 3) are continuously rotatable relative to one another about a rotation axis (20), wherein a first braking component (2) extends along the rotation axis (20) and comprises a core (21) made of a magnetically conductive material, and wherein the second braking component (3) comprises a hollow casing part (13) extending around the first braking component (2), wherein axially spaced and circumferential braking gap sections (5a, 5b, 5c) are formed between the first and second braking components (2, 3) and are at least partially filled with a magnetorheological medium (6), **characterized in that** and at least one third brake gap section (5c) is arranged in a second brake gap section (5b), and **in that** a first electrical coil (261) is assigned to the first brake gap section (5a) and a separately controllable second electrical coil (262) is assigned to the second brake gap section (5b).

2. Haptic operating device (100) according to claim 1, wherein the first braking gap section (5a) and the second braking gap section (5b) are designed differently.

3. Haptic operating device (100) according to any one of the preceding claims, wherein at least partially different materials are used on the first braking gap section (5a) and the second braking gap section (5b).

4. Haptic operating device (100) according to one of the preceding claims, wherein a disk contour (41) is arranged between the casing part (13) and the core (21) on at least one braking gap section (5a).

5. Haptic operating device (100) according to one of the preceding claims, wherein identical disk contours (41) are formed on at least two brake gap sections (5a-5c).

6. Haptic operating device (100) according to one of the preceding claims, wherein a plurality of rolling elements (11) are arranged on the circumference of the core (21) on at least one brake gap section (5b), and wherein the rolling elements (11) are received on a holder (IIF).

7. Haptic operating device (100) according to one of the preceding claims, wherein at least one star contour (40) is arranged on at least one braking gap section (5a) between the casing part (13) and the core (21), so that in the area of the star contour (40) a variable gap height (40c) over the circumference of the braking gap section (5b) and wherein magnetic field concentrators (80, 81) are arranged on the star contour (40) and protrude radially into the braking gap section (5a).

8. Haptic operating device (100) according to claim 7, wherein at least one disk contour (41) designed as a star contour (40) is formed at least on one brake gap section.

9. Haptic operating device (100) according to one of the preceding claims, wherein the first electrical coil (261) and the second electrical coil (262) are each received between the casing part (13) and the core (21) and each around the axis of rotation (20). are wrapped and/or wherein the first electrical coil (261) and the second electrical coil (262) are designed differently.

10. Haptic operating device (100) according to one of the preceding claims, wherein the disk contour (41) is designed as a separate disk body (42) or in one piece with the core (21).

11. Haptic operating device (100) according to one of the preceding claims, wherein the magnetic fields (8) of the first electrical coil (261) and the second electrical coil (262) each essentially axially through the core (21) and the casing part (13) and im Substantially radially pass through the third brake gap section (5c).

12. Haptic operating device (100) according to one of the preceding claims, wherein the first, second and third braking gap sections are formed at a common gap (5).

13. Haptic operating device (100) according to one of the preceding claims, wherein a closed chamber (110) is formed between the brake components (2, 3), and wherein the closed chamber (110) contains at least a significant proportion of a magnetorheological medium (6) such as is filled with a magnetorheological fluid and/or carbonyl iron powder.

14. Haptic operating device (100) according to one of the preceding claims, comprising at least two magnetorheological braking devices (1) and/or comprising at least one drive device for actively rotating one of the braking components (2, 3).

15. Device designed as an operating button (101) or device component (200) with a haptic operating device (100) according to one of the preceding claims, comprising at least one user interface (43), a control panel, a display, a touch-sensitive display with or without haptic feedback and/or at least one sensor.

## Revendications

1. Dispositif de commande haptique (100) muni d'un dispositif de freinage magnéto-rhéologique (1), muni d'un élément de maintien fixe (4) et d'au moins deux éléments de frein (2, 3), un desdits deux éléments de frein (2, 3) étant solidaire en rotation avec l'élément de maintien (4) et lesdits deux éléments de frein (2, 3) pouvant être entraînés en rotation de manière continue l'un par rapport à l'autre autour d'un axe de rotation (20), un premier élément de frein (2) s'étendant le long de l'axe de rotation (20) et comprenant un noyau (21) composé d'un matériau magnétiquement conducteur, et le deuxième élément de frein (3) comprenant une gaine (13) formée creuse s'étendant autour du premier élément de frein (2), des sections d'espace de frein (5a, 5b, 5c) étant formées entre le premier et le deuxième élément de frein (2, 3), espacées axialement les unes des autres, périphériques et remplies au moins partiellement d'un milieu magnéto-rhéologique (6),
**caractérisé en ce**
**qu'**au moins une troisième section d'espace de frein (5c) est agencée entre une première section d'espace de frein (5a) et une deuxième section d'espace de frein (5b), et qu'une première bobine électrique (261) est associée à la première section d'espace de frein (5a), et une deuxième bobine électrique (262), qui peut être commandée séparément, à la deuxième section d'espace de frein (5b).

2. Dispositif de commande haptique (100) selon la revendication 1, la première section d'espace de frein (5a) et la deuxième section d'espace de frein (5b) étant conçues différentes.

3. Dispositif de commande haptique (100) selon l'une quelconque des revendications précédentes, des matériaux au moins partiellement différents étant mis en œuvre dans la première section d'espace de frein (5a) et dans la deuxième section d'espace de frein (5b).

4. Dispositif de commande haptique (100) selon l'une quelconque des revendications précédentes, un contour de disque (41) étant agencé dans au moins une section d'espace de frein (5a) entre la gaine (13) et le noyau (21).

5. Dispositif de commande haptique (100) selon l'une quelconque des revendications précédentes, des contours de disque (41) identiques étant conçus dans au moins deux sections d'espace de frein (5a - 5c).

6. Dispositif de commande haptique (100) selon l'une quelconque des revendications précédentes, une pluralité de corps de rouleau (11) étant agencée sur la circonférence du noyau (21) dans au moins une section d'espace de frein (5b), et les corps de rouleau (11) étant logés dans un support de maintien (11f).

7. Dispositif de commande haptique (100) selon l'une quelconque des revendications précédentes, au moins un contour étoilé (40) étant agencé entre la gaine (13) et le noyau (21) dans au moins une section d'espace de frein (5a), de sorte qu'il en résulte, au niveau du contour étoilé (40), une hauteur d'espace (40c) variable sur toute la circonférence de la section de l'espace de frein (5b), et des concentrateurs de champ magnétique (80, 81) étant agencés sur le contour étoilé (40), lesquels saillent de manière radiale dans la section d'espace de frein (5a).

8. Dispositif de commande haptique (100) selon la revendication 7, au moins un contour de disque (41) en forme de contour étoilé (40) étant conçu dans au moins une section d'espace de frein.

9. Dispositif de commande haptique (100) selon l'une quelconque des revendications précédentes, la première bobine électrique (261) et la deuxième bobine électrique (262) étant chacune logée entre la gaine (13) et le noyau (21), et chacune enroulée autour de l'axe de rotation (20),
et/ou la première bobine électrique (261) et la deuxième bobine électrique (262) étant conçues différentes.

10. Dispositif de commande haptique (100) selon l'une quelconque des revendications précédentes, le contour de disque (41) étant conçu sous forme de corps discal (42) séparé ou d'un seul tenant avec le noyau (21).

11. Dispositif de commande haptique (100) selon l'une quelconque des revendications précédentes, les champs magnétiques (8) de la première bobine électrique (261) et de la deuxième bobine électrique (262) traversant chacun le noyau (21) et la gaine (13) sensiblement dans le sens axial, et la troisième section d'espace de frein (5c) sensiblement dans le sens radial.

12. Dispositif de commande haptique (100) selon l'une quelconque des revendications précédentes, les première, deuxième et troisième sections d'espace de frein étant conçues dans un espace (5) commun.

13. Dispositif de commande haptique (100) selon l'une quelconque des revendications précédentes, une chambre fermée (110) étant conçue entre les éléments de frein (2, 3), et ladite chambre fermée (110) étant remplie, au moins en très grande partie, d'un milieu magnéto-rhéologique (6) tel qu'un fluide magnéto-rhéologique et/ou une poudre de fer carbonyle.

14. Dispositif de commande haptique (100) selon l'une quelconque des revendications précédentes, comprenant au moins deux dispositifs de freinage magnéto-rhéologiques (1)
et/ou comprenant au moins un dispositif d'entraînement pour entraîner en rotation active un des éléments de freinage (2, 3).

15. Dispositif conçu sous forme de bouton de commande (101) ou d'élément d'appareil (200) muni d'un dispositif de commande haptique (100) selon l'une quelconque des revendications précédentes, comprenant au moins une interface utilisateur (43), un tableau de commande, un écran d'affichage, un écran d'affichage tactile avec ou sans retour haptique, et/ou au moins un capteur.
